# EUROPEAN PATENT SPECIFICATION

(11) **EP 3 348 463 B1**
(45) Date of publication and mention of the grant of the patent: **27.04.2022**
(21) Application number: 18150738.5
(22) Date of filing: 09.01.2018
(51) Int. Cl.: B62J 17/00

(54) **STRADDLED VEHICLE**
GRÄTSCHSITZFAHRZEUG
VÉHICULE À ENFOURCHER

(30) Priority: 12.01.2017 JP 2017003387
(43) Date of publication of application: 18.07.2018
(73) Proprietor: Yamaha Hatsudoki Kabushiki Kaisha, Iwata-shi Shizuoka 438-8501 (JP)
(72) Inventor: YAMAUCHI, Yoshinori, Iwata-shi, Shizuoka 438-8501 (JP)
(74) Representative: Grünecker Patent- und Rechtsanwälte PartG mbB

(56) References cited:
- EP-A1- 1 829 775
- EP-A1- 2 540 601
- WO-A1-2016/159894
- JP-A- 2015 067 084
- US-A1- 2015 083 512
- US-B2- 8 845 154

## Description

This invention relates to a straddled vehicle according to the preamble of independent claim 1. A straddled vehicle having the features of the preamble of independent claim 1 can be taken from the prior art document EP EP 2 540 601 A1.

Japanese Unexamined Patent Publication No. 2010-64579 discloses a straddled vehicle. The straddled vehicle has a body frame, a fuel tank, and a seat. The body frame has a head tube and a seat frame. The head tube is disposed at the front of the body frame. The seat frame is disposed at the rear of the body frame. The fuel tank is disposed behind the head tube. The seat is disposed behind the fuel tank. The seat is attached to the seat frame.

The straddled vehicle of Japanese Unexamined Patent Publication No. 2010-64579 further includes a side cover. The side cover has a front cover and a rear cover. The front cover is disposed laterally of the fuel tank. The front cover is attached to the fuel tank. That is, the front cover is positioned by the fuel tank. The rear cover is disposed behind the front cover. The rear cover is attached to the seat frame. That is, the rear cover is positioned by the seat frame. A rear end of the front cover and a front end of the rear cover are joined through a coupling. The coupling is disposed on inner surfaces of the front cover and rear cover. The coupling joins the front cover and rear cover such that the front cover is movable in a longitudinal direction relative to the rear cover. The coupling can therefore join the front cover and rear cover in a way to permit a dimension error of the front cover and rear cover.

However, the conventional example with such construction has the following problems.

The width (interval) of a seam between the rear end of the front cover and the front end of the rear cover varies with the dimension error. When the width of the seam between the rear end of the front cover and the front end of the rear cover is large, the seam between the front cover and rear cover stands out, and continuity of the front cover and rear cover is lost. In other words, the boundary of the front cover and rear cover is noticeable, and the feeling of unity of the front cover and rear cover is lost. As a result, the front cover and rear cover take on an appearance of being divided from each other.

It has been considered a construction in which the rear cover is positioned by the front cover instead of the construction in which the rear cover is positioned by the seat frame. With this cover mounting structure, a relative position between the front cover and rear cover can be maintained constant, without being influenced by a dimension error. Even when the dimension error is large, for example, enlargement of the width of the seam between the front cover and rear cover can be prevented conveniently. It is therefore possible to restrain the seam between the front cover and rear cover from being conspicuous regardless of a dimension error.

However, it has been found that a new problem arises when the above cover mounting structure is employed. A dimension error expresses itself in the position of the rear end of the rear cover. Specifically, the position of the rear end of the rear cover relative to the body frame changes due to a dimension error. A taillight is disposed near the rear end of the rear cover. A change in the position of the rear end of the rear cover may render noticeable a position shifting between the rear end of the rear cover and the taillight.

Then, it has been considered a construction which integrally connects the rear end of the rear cover and the taillight. For example, it has been considered a construction in which the rear end of the rear cover positions the taillight. According to this support structure for the taillight, even when the position of the rear end of the rear cover changes due to a dimension error, the relative position between the rear cover and the taillight can be maintained constant. A position shifting between the rear end of the rear cover and the taillight can therefore be prevented conveniently.

However, it has been found that a different problem arises when the above taillight support structure is employed. With the above taillight support structure, the position of the taillight relative to the body frame changes due to a dimension error. When the position of the taillight relative to the body frame changes, a necessity to consider visibility of the taillight will increase. Further, the rear end of the rear cover enlarges in order to position the taillight, and there is a possibility of reducing the degree of freedom for the shape and design of the rear cover.

Then, it has been considered a construction which can restrain the seam between the front cover and rear cover from being conspicuous, and can restrain the position shifting between the rear cover and taillight from being conspicuous regardless of a dimension error.

It is the object of the present invention to provide a straddled vehicle which can restrain a seam between a front cover and a rear cover from being conspicuous regardless of a dimension error.

According to the present invention said object is solved by a straddled vehicle having the features of independent claim 1. Preferred embodiments are laid down in the dependent claims.

Accordingly, it is provided a straddled vehicle that comprises:
a body frame;
a fuel tank supported by the body frame;
a seat disposed behind the fuel tank and supported by the body frame;
a taillight supported by the body frame, and having at least part thereof disposed further rearward than the seat;
a front cover having at least part thereof disposed below at least one of the fuel tank and the seat in a side view of the vehicle; and
a rear cover joined to the front cover, extending rearward from the front cover, and having at least part thereof disposed below the seat in the side view of the vehicle;
wherein
the fuel tank is positioned by the body frame;
the front cover is positioned by at least one of the body frame and the fuel tank;
the rear cover is positioned by the front cover through a front end of the rear cover joined to a rear end of the front cover; and
the rear cover has a rear end thereof located further rearward than the Z taillight, wherein
   the rear cover is joined to the front cover, and the rear cover is positioned by the front cover through a front end of the rear cover joined to a rear end of the front cover, wherein the front cover and the rear cover are joined by fastening rear end of the front cover and the front end of the rear cover together,a relative position between the front cover and the rear cover is determined uniquely,
   dimension errors of the front cover and rear cover result in a shift of a position of the rear end of the rear cover relative to the body frame.

Preferably, the rear cover is not positioned by the taillight. In other words, the taillight is supported by the body frame to be movable relative to the rear cover. In particular, the taillight and the rear cover are positionally adjustable relative to each other.

The rear cover is positioned by the front cover. A relative position between the front cover and rear cover is therefore determined uniquely. Even if at least one of the front cover and rear cover includes a dimension error, the width of a seam between the front cover and rear cover can reliably be prevented from becoming large. Regardless of dimension errors, therefore, the seam between the front cover and rear cover can conveniently be prevented from being conspicuous,

The fuel tank is positioned by the body frame, the front cover is positioned by at least one of the body frame and the fuel tank, and the rear cover is positioned by the front cover.

A dimension error will therefore show up in the position of the rear end of the rear cover. Specifically, a dimension error will result in a shift of the position of the rear end of the rear cover relative to the body frame. When the position of the rear end of the rear cover shifts relative to the body frame, the position of the rear end of the rear cover will also shift relative to the taillight supported by the body frame. However, the rear end of the rear cover is located further rearward than the taillight. Therefore, even if a position shifting occurs between the rear end of the rear cover and the taillight, the position shifting between the rear end of the rear cover and the taillight can effectively be restrained from being conspicuous.

Further, the rear cover is not positioned by the taillight. In other words, the taillight is supported by the body frame to be movable relative to the rear cover. In particular, the taillight and the rear cover are positionally adjustable relative to each other. Therefore, even if the position of the rear end of the rear cover shifts relative to the body frame, the position of the rear end of the rear cover can conveniently be permitted to shift relative to the taillight, and the position of the taillight can effectively be restrained from shifting relative to the body frame. Therefore, the visibility of the taillight can be secured conveniently.

In the above straddled vehicle, it is preferred that the body frame supports the rear cover to be positionally adjustable, and supports the taillight in a position different from a position for supporting the rear cover. The position in which the body frame supports the rear cover is different from the position in which the body frame supports the taillight. The rear cover and taillight can therefore be provided movable relative to each other. Further, since the body frame supports the rear cover to be positionally adjustable, the position of the rear end of the rear cover can conveniently be permitted to shift relative to the body frame and taillight.

In the above straddled vehicle, it is preferred that the rear end of the rear cover overlaps all of the taillight in plan view. This can with increased effect restrain a position shifting between the rear end of the rear cover and the taillight from being conspicuous.

In the above straddled vehicle, it is preferred that the rear end of the rear cover has a rear edge thereof located further rearward than a rear extremity of the taillight in the side view of the vehicle. Since the entire rear edge of the rear end of the rear cover is located further rearward than the rear extremity of the taillight in the side view of the vehicle, a position shifting between the rear end of the rear cover and the taillight can with increased effect be restrained from being conspicuous.

In the above straddled vehicle, it is preferred that the taillight has a rear edge thereof extending linearly in the side view of the vehicle; and the rear edge of the rear cover is located further rearward than an imaginary line passing through the rear edge of the taillight in the side view of the vehicle. The rear edge of the rear cover is not located on an extension of the rear edge of the taillight in the side view of the vehicle. Specifically, the rear edge of the rear cover is located further rearward than the imaginary line passing through the rear edge of the taillight in the side view of the vehicle. This can with increased effect restrain a position shifting between the rear end of the rear cover and the taillight from being conspicuous.

In the above straddled vehicle, it is preferred that the rear end of the rear cover is disposed above the taillight. This can with increased effect restrain a position shifting between the rear end of the rear cover and the taillight from being conspicuous.

In the above straddled vehicle, it is preferred that the rear end of the rear cover has a rear edge thereof extending rearward and upward in the side view of the vehicle. Since the rear end of the rear cover is disposed above the taillight, and the rear edge of the rear cover extends rearward and upward in the side view of the vehicle, the light of the taillight can conveniently be prevented from being blocked by the rear end of the rear cover. That is, the visibility of the taillight can be prevented from being lowered by the rear end of the rear cover.

It is preferred that the above straddled vehicle further comprises a protective cover supported by the body frame; wherein the taillight is supported by the body frame through the protective cover; and the rear end of the rear cover extends further rearward than the protective cover. The taillight can be supported conveniently by the protective cover. When the position of the rear end of the rear cover shifts relative to the body frame, the position of the rear end of the rear cover shifts also relative to the protective cover supported by the body frame. However, the rear end of the rear cover extends further rearward than the protective cover. Therefore, even if a position shifting occurs between the rear end of the rear cover and the protective cover, the position shifting between the rear end of the rear cover and the protective cover can effectively be restrained from being conspicuous.

In the above straddled vehicle, it is preferred that at least part of the protective cover is disposed below the rear end of the rear cover; the protective cover has an upper wall portion bulging upward from an upper surface of the taillight; the upper wall portion has a width at least corresponding to a width of the taillight in a rear view of the vehicle; and the upper wall portion has an upper edge thereof overlapping the rear end of the rear cover in the rear view of the vehicle. Since the upper edge of the upper wall portion overlaps the rear end of the rear cover in the rear view of the vehicle, a position shifting between the rear end of the rear cover and the taillight can with increased effect be restrained from being conspicuous.

In the above straddled vehicle, it is preferred that the front cover has a joint portion for joining the fuel tank; and the fuel tank positions the joint portion of the front cover. According to this construction, a relative position between the joint portion of the front cover and the fuel tank can be determined uniquely. Thus, the front cover can conveniently be positioned by the fuel tank.

In the above straddled vehicle, it is preferred that the fuel tank includes a fuel tank body; and an oil filler projecting upward from the fuel tank body; wherein the joint portion of the front cover includes an opening substantially the same size as the oil filler; and the oil filler is disposed in the opening. According to this construction, the oil filler can conveniently prohibit the position of the opening from moving longitudinally and transversely of the straddled vehicle. That is, the oil filler can conveniently position the opening. The fuel tank can therefore conveniently potion the front cover.

In the above straddled vehicle, it is preferred that the rear cover has a joint portion for joining to the front cover; and the front cover has a positioning portion for joining the joint portion of the rear cover, and positioning the joint portion of the rear cover. According to this construction, the positioning portion of the front cover can conveniently position the joint portion of the rear cover. The front cover can therefore conveniently position the rear cover.

In the above straddled vehicle, it is preferred that one of the positioning portion of the front cover and the joint portion of the rear cover is a projection projecting inward of a transverse direction of the straddled vehicle; and the other of the positioning portion of the front cover and the joint portion of the rear cover is a recess engageable with the projection. According to this construction, the front cover and rear cover can conveniently be restrained from swelling in the transverse direction. If, for example, one of the positioning portion of the front cover and the joint portion of the rear cover has a projection projecting in a direction perpendicular to the transverse direction, it will be necessary for each of the front cover and rear cover to have a turnback portion turned back inward in the transverse direction, and for this turnback portion to form a projection or recess. On the other hand, since one of the positioning portion of the front cover and the joint portion of the rear cover has a projection projecting inward in the transverse direction in this embodiment, there is no need for each of the front cover and rear cover to have the above turnback portion. The front cover and rear cover can therefore be reduced in size in the transverse direction,

In the above straddled vehicle, it is preferred that the rear cover includes a rear right cover disposed rightward of the seat in plan view; a rear left cover disposed leftward of the seat in plan view; and a rear center cover disposed behind the seat in plan view, and joined to the rear right cover and the rear left cover; the rear right cover extending further rearward than the seat; the rear left cover extending further rearward than the seat; the rear center cover being disposed leftward of the rear right cover, and rightward of the rear left cover; and the rear center cover includes a right edge overlapping the rear right cover in a position rearward of the seat in plan view; and a left edge overlapping the rear left cover in a position rearward of the seat in plan view; the right edge being disposed below the rear right cover; the left edge being disposed below the rear left cover. The rear cover is constructed of a plurality of cover members (specifically, the rear right cover, left rear cover, and rear center cover). This can simplify the shape of each of the plurality of members. Each of the plurality of members can therefore be easily shaped. The rear center cover has the right edge overlapping the rear right cover in a position rearward of the seat in plan view, and the right edge is disposed below the rear right cover. This can conveniently restrain the seam between the rear right cover and rear center cover from being conspicuous. Similarly, the rear center cover has the left edge overlapping the rear left cover in a position rearward of the seat in plan view, and the left edge is disposed below the rear left cover. This can conveniently restrain the seam between the rear left cover and rear center cover from being conspicuous.

This specification discloses a teaching relating to the following straddled vehicle:

(1) A straddled vehicle comprising:
a body frame;
a fuel tank supported by a front portion of the body frame;
a seat disposed behind the fuel tank;
a front cover having at least part thereof disposed below at least one of the fuel tank and the seat in a side view of the vehicle;
a rear cover joined to the front cover and extending rearward from the front cover; and
a taillight supported by a rear portion of the body frame;
wherein
the fuel tank is positioned by the front portion of the body frame;
the front cover is positioned by at least one of the front portion of the body frame and the fuel tank;
the rear cover is positioned by the front cover; and
the rear cover has a rear end thereof extending further rearward than the taillight.

According to (1) above, the rear cover is positioned by the front cover. A relative position between the front cover and rear cover is therefore determined uniquely. Even if at least one of the front cover and rear cover includes a dimension error, the width of a seam between the front cover and rear cover can reliably be prevented from becoming large. Regardless of dimension errors, therefore, the seam between the front cover and rear cover can conveniently be restrained from being conspicuous.

The fuel tank is positioned by the front portion of the body frame, the front cover is positioned by at least one of the front portion of the body frame and the fuel tank, and the rear cover is positioned by the front cover. A dimension error will therefore show up in the position of the rear end of the rear cover. Specifically, a dimension error will result in a shift of the position of the rear end of the rear cover relative to the body frame. When the position of the rear end of the rear cover shifts relative to the body frame, the position of the rear end of the rear cover will also shift relative to the taillight supported by the body frame. However, the rear end of the rear cover extends further rearward than the taillight. Therefore, even if a position shifting occurs between the rear end of the rear cover and the taillight, the position shifting between the rear end of the rear cover and the taillight can effectively be restrained from being conspicuous.

Further, the taillight is supported by the rear portion of the body frame. The rear portion of the body frame is different from the front portion of the body frame. Thus, the rear cover and the taillight are supported by the body frame in different positions. Therefore, even if the position of the rear end of the rear cover shifts relative to the body frame, the position of the rear end of the rear cover can conveniently be permitted to shift relative to the taillight, and the position of the taillight can effectively be restrained from shifting relative to the body frame. Therefore, the visibility of the taillight can be secured conveniently.

(2) In the above straddle vehicle, the front cover has a front end thereof located forward of the oil filler in the side view of the vehicle.

According to (2) above, the entirety of the front cover and rear cover has an increased length of extension in the longitudinal direction. The front cover and rear cover can form an enlarged configuration flowing from front to rear.

For the purpose of illustrating the present teaching, there are shown in the drawings several forms which are presently preferred, it being understood, however, that the present teaching is not limited to the precise arrangement and instrumentalities shown.
Fig. 1 is a left side view of a straddled vehicle according to an embodiment.
Fig. 2 is an exploded perspective view of the straddled vehicle seen from front.
Fig. 3 is an exploded perspective view of the straddled vehicle seen from behind.
Fig. 4 is a plan view of a rear portion of the straddled vehicle.
Fig. 5 is a rear view of the straddled vehicle.
Fig. 6 is a view schematically showing a mounting structure of each member.
Fig. 7 is a sectional view taken along line VII-VII of Fig. 1.
Fig. 8 is a plan view of a rear cover and a taillight.
Fig. 9 is a sectional view taken along line IX-IX of Fig. 8.
Fig. 10 is a left side view of the rear portion of the straddled vehicle.
Fig. 11 is a rear view of a protective cover.
Fig. 12 is a rear view of the rear cover, protective cover, and taillight.
Fig. 13 is a sectional view taken along line XIII-XIII of Fig. 4.

A straddled vehicle 1 according to the present teaching will be described hereinafter with reference to the drawings.

### 1. Outline construction of the straddled vehicle

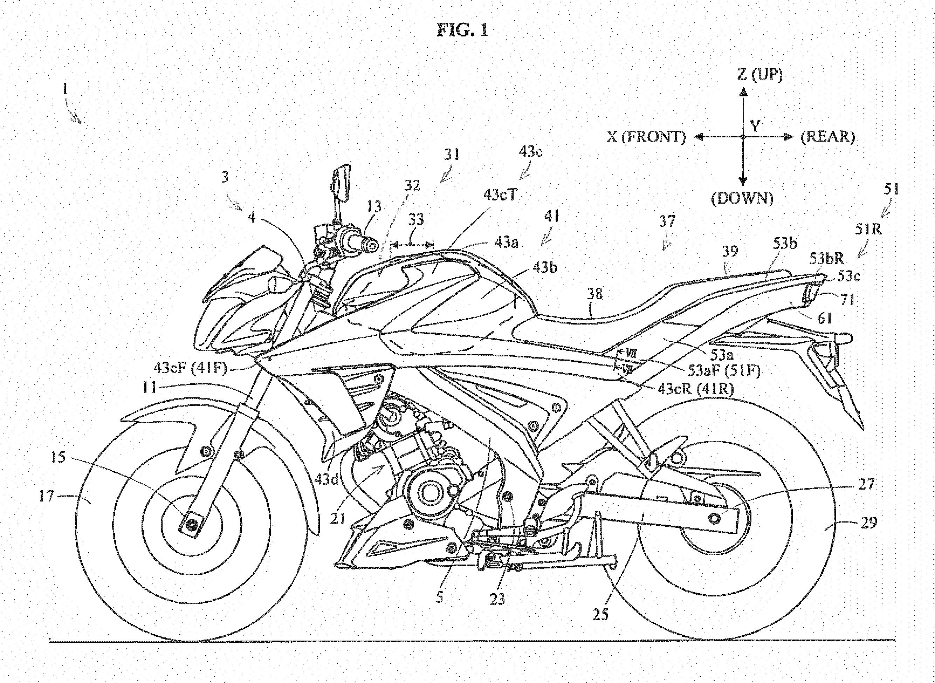

Fig. 1 is a left side view of a straddled vehicle according to an embodiment.

In this specification, a longitudinal direction, transverse direction, and up-down direction of the straddled vehicle 1, respectively, mean the longitudinal direction, transverse direction, and up-down direction as seen from the rider mounted on the straddled vehicle 1. The terms forward, rearward, rightward, leftward, upward, and downward mean forward, rearward, rightward, leftward, upward, and downward as seen from the rider mounted on the straddled vehicle 1.

For reference, and by way of example, the drawings show a longitudinal direction X, a transverse direction Y, and an up-down direction Z of the straddled vehicle 1. For reference, and by way of example, the drawings show forward, rearward, upward, downward, rightward, and leftward.

In this specification, however, unless otherwise specified, the longitudinal direction, forward, and rearward include not only directions parallel to the illustrated longitudinal direction X but also directions approximate to the longitudinal direction X. The directions approximate to the longitudinal direction X are, for example, directions at angles not exceeding 45 degrees to the longitudinal direction X. Similarly, unless otherwise specified, the transverse direction, rightward, and leftward include not only directions parallel to the transverse direction Y but also directions approximate to the transverse direction Y. Unless otherwise specified, the up-down direction, upward, and downward include not only directions parallel to the up-down direction Z but also directions approximate to the up-down direction Z.

Reference is made to Fig. 1. The straddled vehicle 1 is a street type vehicle. The straddled vehicle 1 has a body frame 3. The body frame 3 has a head tube 4 and a pair of right and left main frames 5. Each main frame 5 is connected to the head tube 4. Each main frame 5 extends rearward and downward from the head tube 4. The left main frame 5 is located leftward of the right main frame 5. The left main frame 5 appears in Fig. 1. The pair of main frames 5 have the same construction and shape except for being bilaterally symmetric.

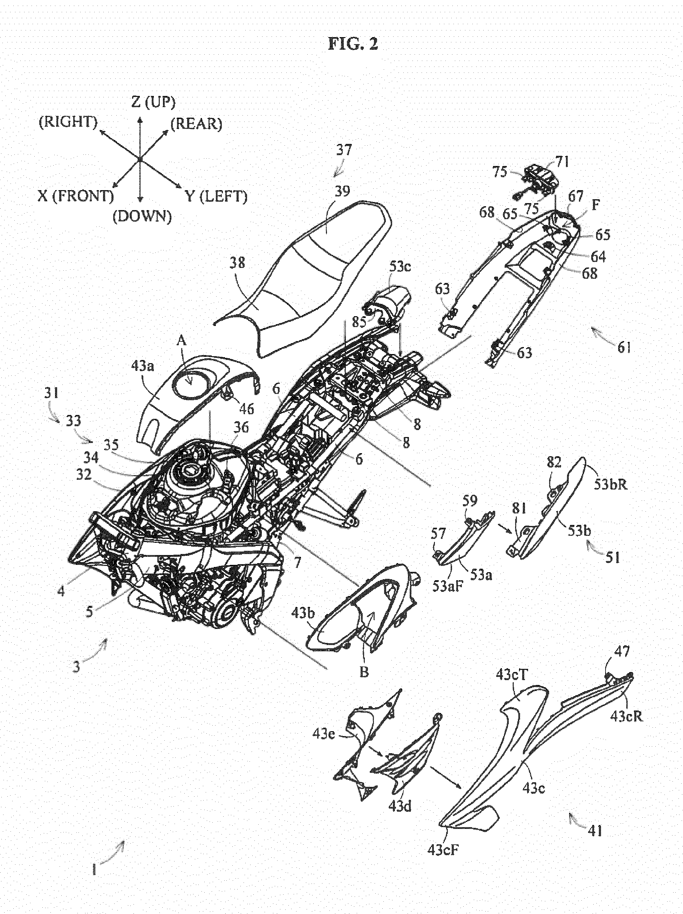

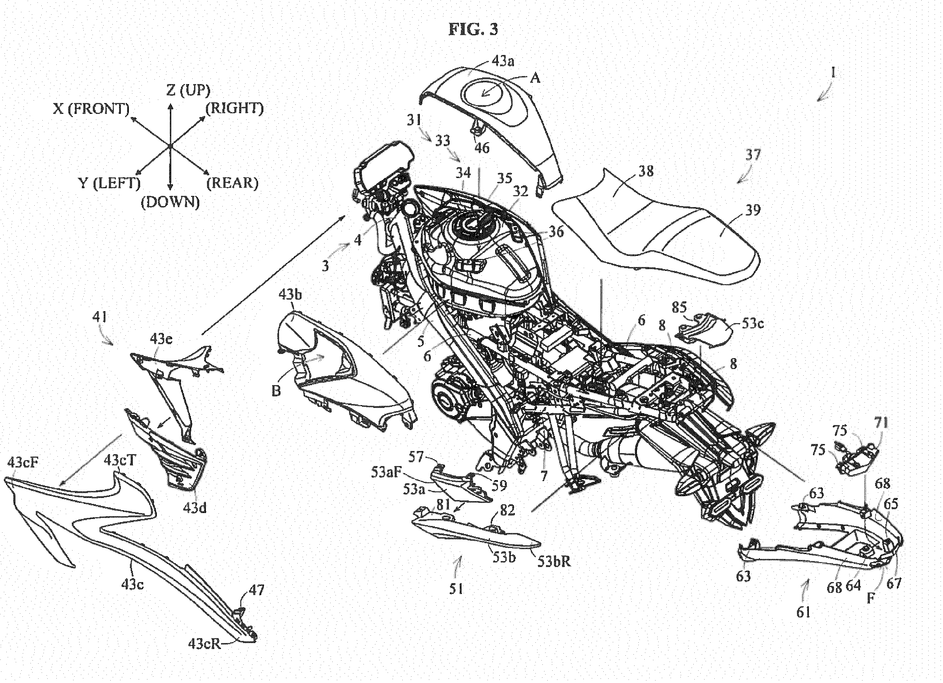

Fig. 2 is an exploded perspective view of the straddled vehicle seen from front. Fig. 3 is an exploded perspective view of the straddled vehicle seen from behind. The body frame 3 has a pair of right and left seat frames 6 and a pair of right and left back stays 7. Figs. 2 and 3 omit illustration of the right back stay 7.

The left seat frame 6 is disposed above the left back stay 7. The left seat frame 6 and left back stay 7 are connected to the left main frame 5, respectively. The left seat frame 6 extends rearward and upward from the left main frame 5. The left back stay 7 extends rearward and upward from the left main frame 5 below the left seat frame 6. The left back stay 7 has a rear end thereof connected to the left seat frame 6.

The right seat frame 6 and right back stay 7 are arranged rightward of the left seat frame 6 and left back stay 7, respectively. The right seat frame 6 and right back stay 7 have the same constructions and shapes as the left seat frame 6 and left back stay 7 except for being bilaterally symmetric, respectively.

The body frame 3 has a plurality of (e.g. two) cross members 8. Each cross member 8 connects the right and left seat frames 6. Each cross member 8 has one end thereof connected to the left seat frame 6. The other end of each cross member 8 is connected to the right seat frame 6.

The head tube 4 and main frames 5 are an example of the "front portion of the body frame" in the present teaching. The seat frames 6, back stays 7, and cross members 8 are an example of the "rear portion of the body frame" in the present teaching.

Reference is made to Fig. 1. The straddled vehicle 1 has a steering device 11, a handlebar 13, an axle 15, and a front wheel 17. The steering device 11 is supported by the head tube 4. The steering device 11 is rotatable relative to the head tube 4. The handlebar 13 is connected to an upper part of the steering device 11. The axle 15 is supported by a lower part of the steering device 11. The front wheel 17 is supported by the axle 15. The front wheel 17 is rotatable about the axle 15. The handlebar 13 is operated by the rider of the straddled vehicle 1. In response to operation of the handlebar 13, the steering device 11 rotates relative to the head tube 4, thereby to change the direction of the front wheel 17 and change the course of the straddled vehicle 1.

The straddled vehicle 1 has an engine 21. The engine 21 generates power. The engine 21 is disposed below the main frames 5 in a side view of the vehicle. The engine 21 is supported by the main frames 5.

The straddled vehicle 1 has a pivot shaft 23, a rear arm 25, an axle 27, and a rear wheel 29. The pivot shaft 23 is disposed behind the engine 21. The pivot shaft 23 is supported by the pair of main frames 5. The pivot shaft 23 supports the rear arm 25. The rear arm 25 extends rearward from the pivot shaft 23. The rear arm 25 is swingable about the pivot shaft 23. The axle 27 is supported by a rear part of the rear arm 25. The rear wheel 29 is supported by the axle 27. The rear wheel 29 is rotatable about the axle 27. The straddled vehicle 1 further includes a transmission mechanism not shown. The transmission mechanism transmits the power generated by the engine 21 to the rear wheel 29. The rear wheel 29 is rotated by the power transmitted by the transmission mechanism. The straddled vehicle 1 moves forward with rotation of the rear wheel 29.

The straddled vehicle 1 has a fuel tank 31. The fuel tank 31 stores fuel. The fuel tank 31 is disposed above the engine 21. The fuel tank 31 is disposed above the main frames 5 in the side view of the vehicle.

The fuel tank 31 has a fuel tank body 32 and an oil filler 33. The oil filler 33 projects upward from the fuel tank body 32. Fig. 1 shows a range in the longitudinal direction X in which the oil filler 33 is located.

Reference is made to Figs. 2 and 3. The oil filler 33 includes a filler pipe 34 and a cap 35. The filler pipe 34 has a cylindrical shape. The filler pipe 34 is connected to an upper surface of the fuel tank body 32. The filler pipe 34 extends upward from the upper surface of the fuel tank body 32. The cap 35 has a disk shape. The cap 35 is attached to an upper end of the filler pipe 34. The cap 35 is turnable between a close position for closing the upper end of the filler pipe 34, and an open position for opening the upper end of the filler pipe 34. Figs. 2 and 3 show the cap 35 in the open position.

Reference is made to Fig. 1. The straddled vehicle 1 has a seat 37. The seat 37 is disposed behind the fuel tank 31. The seat 37 is supported by the body frame 3. The seat 37 is disposed above the seat frames 6. The seat 37 has a first seat 38 for seating a driver, and a second seat 39 for seating a fellow passenger. The second seat 39 is located behind the first seat 38.

The straddled vehicle 1 has a front cover 41. The front cover 41 overlaps the fuel tank 31 in the side view of the vehicle. The front cover 41 covers the upper surface, right surface, and left surface of the fuel tank body 32.

The front cover 41 further extends downward on the right side and left side of the fuel tank 31. The front cover 41 extends to a position lower than the fuel tank 31. The front cover 41 overlaps part of the main frames 5 and part of the engine 21 in the side view of the vehicle.

The front cover 41 extends forward in positions below the fuel tank 31, leading up to a front end 41F of the front cover 41. The front end 41F of the front cover 41 is located forward and downward of the oil filler 33 in the side view of the vehicle. The front end 41F of the front cover 41 is located forward and downward of the fuel tank 31 in the side view of the vehicle. The front end 41F of the front cover 41 overlaps the steering device 11 in the side view of the vehicle.

Further, the front cover 41 extends rearward in the positions lower than the fuel tank 31, leading up to a rear end 41R of the front cover 41. The rear end 41R of the front cover 41 is located rearward and downward of the fuel tank 31 in the side view of the vehicle. The rear end 41R of the front cover 41 is located below the seat 37 (first seat 38) in the side view of the vehicle. Thus, the front cover 41 extends rearward from the fuel tank 31. Part of the front cover 41 is located below the fuel tank 31 and seat 37 in the side view of the vehicle.

Reference is made to Figs. 1 - 3. The front cover 41 includes a plurality of cover members separable from one another. The plurality of cover members are one tank center cover 43a, a right and left pair of tank side covers 43b, a right and left pair of first front side covers 43c, a right and left pair of second front side covers 43d, and a right and left pair of third front side covers 43e.

The tank center cover 43a is mounted on the upper surface of the fuel tank body 32. The tank center cover 43a has an opening A which is substantially the same size as an outside diameter of the cap 35.

The right and left tank side covers 43b are arranged on the right surface and left surface of the fuel tank body 32, respectively. Each tank side cover 43b has a cutout B opening downward.

Each of the first front side covers 43c has a top end 43cT, a front end 43cF, and a rear end 43cR. The top end 43cT is disposed in a position overlapping the cutout B of the tank side cover 43b in the side view of the vehicle. The top end 43cT overlaps part of the fuel tank body 32 in the side view of the vehicle. The front end 43cF is disposed forward and downward of the top end 43cT in the side view of the vehicle. The front end 43cF corresponds to the front end 41F of the front cover 41. The rear end 43cR is disposed rearward and downward of the top end 43cT in the side view of the vehicle. The rear end 43cR corresponds to the rear end 41R of the front cover 41. Each of the first front side covers 43c extends from the front end 43cF toward the top end 43cT, and extends from the front end 43cF toward the rear end 43cR. That is, each of the first front side covers 43c is approximately V-shaped in the side view of the vehicle.

Each of the second front side covers 43d and third front side covers 43e overlaps the front end 43cF of the first front side cover 43c in the side view of the vehicle. Each of the second front side covers 43d and third front side covers 43e extends below of the front end 43cF of the first front side cover 43c.

The above covers 43a-43e, when not particularly distinguished, will be collectively called "cover members 43" or "cover members 43 included in the front cover 41". Each cover member 43 is a resin molding.

The straddled vehicle 1 has a rear cover 51. The rear cover 51 is joined to the front cover 41. Specifically, a front end 51F of the rear cover 51 is joined to the rear end 41R of the front cover 41. The rear cover 51 extends rearward from the front cover 41.

Part of the rear cover 51 is disposed below the seat 37 in the side view of the vehicle. The rear cover 51 is disposed above the rear wheel 29 in the side view of the vehicle. The rear cover 51 extends rearward and upward in the side view of the vehicle. A rear end 51R of the rear cover 51 extends further rearward of the seat 37 in the side view of the vehicle.

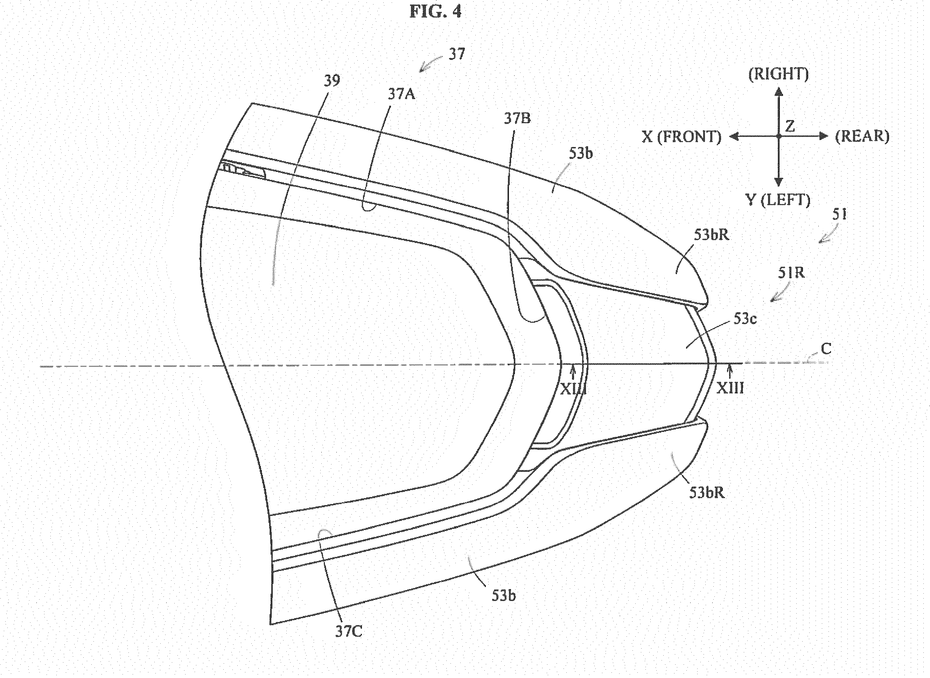

Fig. 4 is a plan view of a rear portion of the straddled vehicle 1. Fig. 4 shows a vehicle center plane C. The vehicle center plane C is an imaginary plane extending through the center of the straddled vehicle 1 and perpendicular to the transverse direction Y. Of the transverse direction Y, the direction approaching the vehicle center plane C will be called "inward in the transverse direction Y" as appropriate. Of the transverse direction Y, the direction moving away from the vehicle center plane C will be called "outward in the transverse direction Y". Unless otherwise indicated, "inward in the transverse direction Y" and "outward in the transverse direction Y" include not only directions parallel to the transverse direction Y but also directions approximate to the transverse direction Y.

The rear cover 51 is disposed rightward, leftward, and rearward of the seat 37 in plan view. The rear cover 51 is curved along a right edge 37A, a rear edge 37B, and a left edge 37C of the seat 37 in plan view.

Reference is made to Figs. 1 - 4. The rear cover 51 includes a plurality of cover members separable from one another. The plurality of cover members are a right and left pair of first rear side covers 53a, a right and left pair of second rear side covers 53b, and one rear center cover 53c. Fig. 4 omits illustration of the first rear side covers 53a.

Reference is made to Fig. 1. The first rear side covers 53a are arranged below the first seat 38 in the side view of the vehicle. The first rear side covers 53a extend rearward and upward in the side view of the vehicle. Front ends 53aF of the first rear side covers 53a correspond to the front end 51F of the rear cover 51. The front ends 53aF of the first rear side covers 53a are joined to the rear end 41R of the front cover 41.

The second rear side covers 53b are arranged behind the first rear side covers 53a. The second rear side covers 53b are arranged below the second seat 39 in the side view of the vehicle. The second rear side covers 53b extend rearward and upward in the side view of the vehicle. The second rear side covers 53b are gripped by the fellow passenger of the straddled vehicle 1. That is, the second rear side covers 53b have the function of grab bars.

Reference is made to Fig. 4. The right and left second rear side covers 53b are arranged rightward and leftward of the seat 37 in plan view, respectively. The second rear side covers 53b extend in the longitudinal direction X along the right side and left side of the seat 37. Rear ends 53bR of the second rear side covers 53b extend further rearward than the seat 37. The rear ends 53bR are not in contact with each other, but are separated in the transverse direction Y. The entirety of the second rear side covers 53b, in plan view, is shaped to extend substantially linearly in the longitudinal direction X.

The rear center cover 53c is disposed behind the seat 37 in plan view. The rear center cover 53c is disposed between the rear ends 53bR of the second rear side covers 53b. Specifically, the rear center cover 53c is disposed leftward of the rear end 53bR of the right second rear side cover 53b, and rightward of the rear end 53bR of the left second rear side cover 53b.

The rear ends 53bR of the second rear side covers 53b and the rear center cover 53c correspond to the rear end 51R of the rear cover 51 noted hereinbefore.

The above covers 53a-53c, when not particularly distinguished, will be collectively called "cover members 53" or "cover members 53 included in the rear cover 51". Each cover member 53 is a resin molding.

Reference is made to Fig. 1. The straddled vehicle 1 has a protective cover 61. The protective cover 61 is disposed below the rear cover 51 in the side view of the vehicle. The protective cover 61 is disposed above the rear wheel 29 in the side view of the vehicle. The protective cover 61 extends rearward and upward as does the rear cover 51. Part of the protective cover 61 is disposed below the rear end 51R of the rear cover 51.

Reference is made to Fig. 2. The protective cover 61 has a box-like shape open upward. The protective cover 61 has an opening F. The opening F is formed in a rear portion of the protective cover 61.

The straddled vehicle 1 has a taillight 71. At least part of the taillight 71 is disposed further rearward than the seat 37. The taillight 71 is mounted in the opening F of the protective cover 61. The taillight 71 has a rear end surface thereof protruding rearward from the opening F. Part (excluding the rear end surface) of the taillight 71 is contained in the protective cover 61. The taillight 71 is disposed below the rear end 51R of the rear cover 51 in the side view of the vehicle.

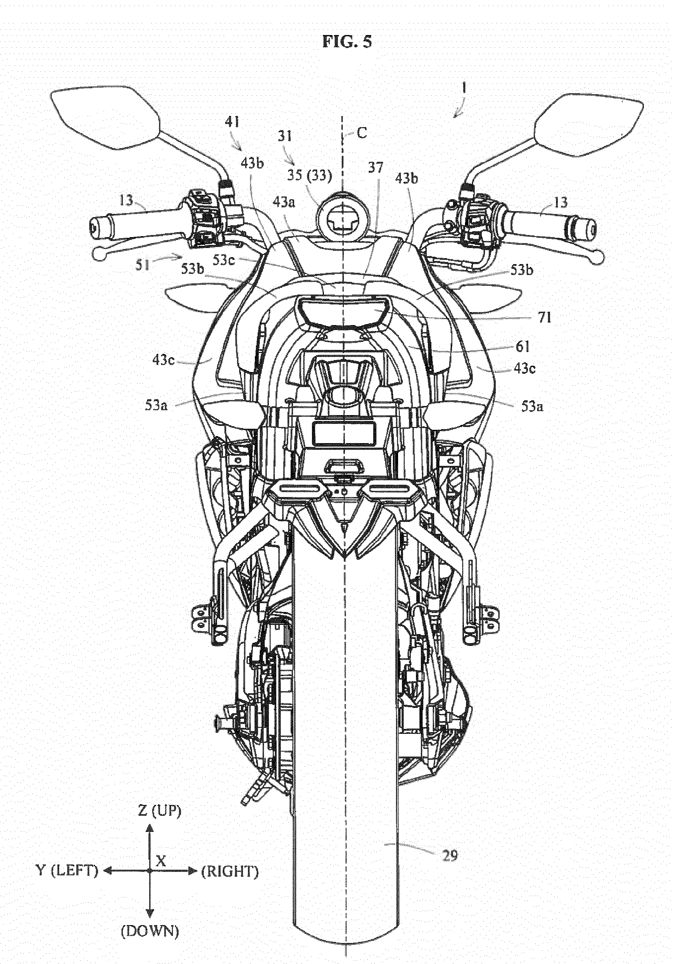

Fig. 5 is a rear view of the straddled vehicle 1. The protective cover 61 is disposed below the rear cover 51 in the rear view. The taillight 71 is also disposed below the rear cover 51 in the rear view. In the rear view, the rear end 51R of the rear cover 51 and the protective cover 61 are arranged in the up-down direction Z. In the rear view, the rear end 51R of the rear cover 51 and the taillight 71 are arranged in the up-down direction Z. The protective cover 61 is, in the rear view, located upward, rightward, leftward, and downward of the taillight 71.

Reference is made to Fig. 1. The seat 37 is disposed behind the fuel tank 31 such that part of the seat 37 is located at the same height as the fuel tank 31. The driver of the straddled vehicle 1 sits down straddling the first seat 38, takes a knee grip, and grasps the handlebar 13. The knee grip means holding a part of the straddled vehicle 1 between both legs of the driver. The part of the straddled vehicle 1 is, for example, the fuel tank 31, front cover 41, or other part existing forward of the seat 37. The fellow passenger of the straddled vehicle 1 sits down straddling the second seat 39, and grasps the second rear side covers 53b.

### 2. Mounting structure

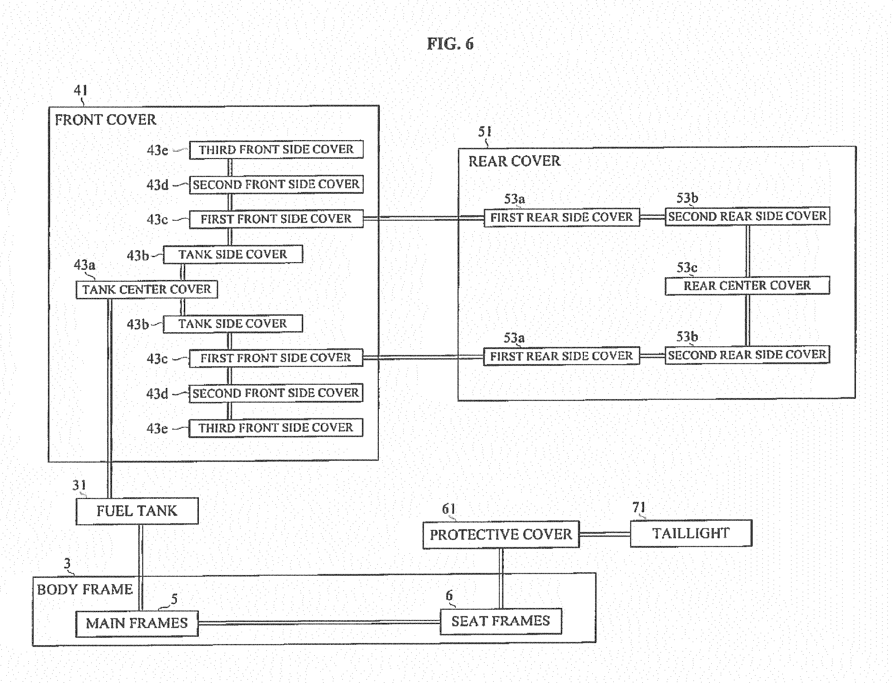

Reference is made to Figs. 1 - 3 and 6. Fig. 6 is a view schematically showing a mounting structure of each member. Mounting structures relating to the front cover 41, rear cover 51, and taillight 71 will be described.

### 2-1. Joining of body frame 3 and fuel tank 31

The body frame 3 supports the fuel tank 31. Specifically, the fuel tank 31 is supported by the main frames 5.

Here, the body frame 3 and fuel tank 31 are connected not to be positionally adjustable. In other words, a connector (not shown) which connects the body frame 3 and fuel tank 31 provides no adjustment allowance for adjusting a relative position between the body frame 3 and fuel tank 31. The fuel tank 31 is therefore positioned by the body frame 3. In other words, the fuel tank 31 is disposed in a predetermined position provided by the body frame 3.

In Fig. 6, each positioning member and each member positioned by that member are connected by a double line.

### 2-2. Joining of fuel tank 31 and front cover 41

The fuel tank 31 is joined to the front cover 41 (tank center cover 43a). Consequently, the front cover 41 is positioned by the fuel tank 31.

Specifically, the cap 35 of the fuel tank 31 is placed in the opening A of the tank center cover 43a. Since the opening A is substantially the same size as the outside diameter of the cap 35, the opening A and cap 35 are connected not to be positionally adjustable. More particularly, the opening A is immovable in the longitudinal direction X and transverse direction Y relative to the cap 35.

Reference is made to Figs. 2 and 3. The fuel tank 31 has a mounting seat 36 installed on the upper surface of the fuel tank body 32. The tank center cover 43a has a mounting seat 46. The mounting seat 36 and mounting seat 46 are fastened together by a fastening member not shown. The fastening member is a bolt or screw, for example. Neither of the mounting seats 36 and 46 has an adjustment allowance for adjusting the position of the tank center cover 43a relative to the fuel tank 31. The mounting seat 36 and mounting seat 46 are therefore connected not to be positionally adjustable.

As a result of the connection between the opening A and cap 35 and the fastening of the mounting seats 36 and 46, the tank center cover 43a is positioned by the fuel tank 31. In other words, the tank center cover 43a is disposed in a predetermined position provided by the cap 35 and mounting seat 36 of the fuel tank 31.

The cap 35 and mounting seat 36 are an example of the "positioning portion of the fuel tank" in the present teaching. Each of the opening A and mounting seat 46 is an example of the "joint portion of the front cover 41" in the present teaching.

### 2-3. Joining between cover members 43 included in front cover 41

The tank center cover 43a is joined to the tank side covers 43b. Consequently, the tank side covers 43b are positioned by the tank center cover 43a.

The tank side covers 43b are joined to the first front side covers 43c. Consequently, the first front side covers 43c are positioned by the tank side covers 43b.

The first front side covers 43c are joined to the second front side covers 43d. Consequently, the second front side covers 43d are positioned by the first front side covers 43c.

The second front side covers 43d are joined to the third front side covers 43e. Consequently, the third front side covers 43e are positioned by the second front side covers 43d.

As described above, a relative position between the cover members 43 connected to each other is determined uniquely. Consequently, the width (interval) of a seam between the cover members 43 is maintained constant. Even if at least one of the cover members 43 includes a dimension error, the width of an actual seam between the cover members 43 can conveniently be prevented from becoming larger than a design value. Consequently, the seam between the cover members 43 can effectively be restrained from being conspicuous.

Here, the "seam", in a strict sense, means a seam visible in an assembled state of the straddled vehicle 1. In other words, the "seam" means a seam between outer surfaces of the cover members, and does not mean a seam between inner surfaces of the cover members.

The dimension error is a difference between an actual size of a cover member and a design size of the cover member.

A connection between the cover members 43 can employ various connection structures. For example, a connection may be constructed of a projection formed on one of the cover members 43, and a recess formed in the other cover member and capable of engaging with the projection. For example, a connection may be constructed of a first mounting seat provided for one of the cover members, a second mounting seat provided for the other cover member, and a fastening member for fastening the first mounting seat and second mounting seat together.

### 2-4. Joining of front cover 41 and rear cover 51

The rear end 41R of the front cover 41 is joined to the front end 51F of the rear cover 51. Specifically, the rear ends 43cR of the first front side covers 43c are joined to the front ends 53aF of the first rear side covers 53a. Consequently, the rear cover 51 is positioned by the front cover 41.

Reference is made to Figs. 2 and 3. Each first front side cover 43c has a mounting seat 47. The mounting seat 47 is disposed at the rear end 43cR. The mounting seat 47 projects inward in the transverse direction Y. Each first rear side cover 53a has a first mounting seat 57. The first mounting seat 57 is disposed at the front end 53aF. The first mounting seat 57 projects inward in the transverse direction Y. The mounting seat 47 and first mounting seat 57 are fastened by a fastening member not shown. The mounting seat 47 and first mounting seat 57 are joined not to be positionally adjustable. Neither of the mounting seat 47 and first mounting seat 57 has an adjustment allowance for adjusting a relative position between the first front side cover 43c and first rear side cover 53a. The first front side cover 43c and first rear side cover 53a are joined by fastening the mounting seat 47 and first mounting seat 57 together.

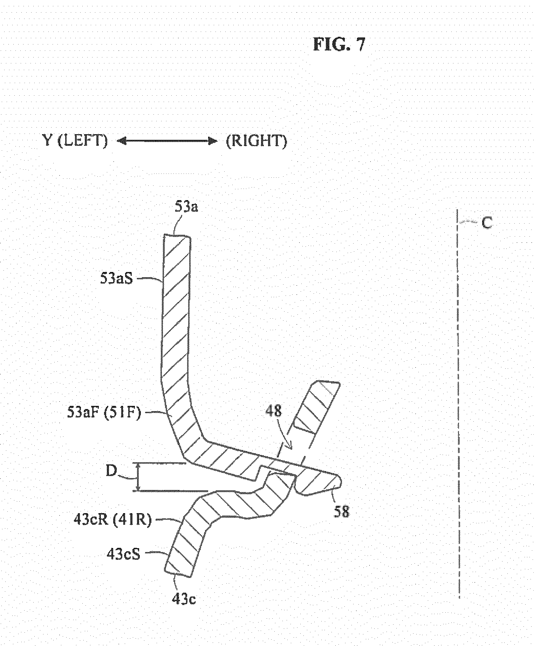

Fig. 7 is a sectional view taken along line VII-VII of Fig. 1. The first rear side cover 53a has a projection 58. The projection 58 is disposed at the front end 53aF. The projection 58 projects inward in the transverse direction Y. The first front side cover 43c has a recess 48 engageable with the projection 58. The recess 48 is disposed at the rear end 43cR. The recess 48 is located in a position overlapping the projection 58 in the side view of the vehicle. The recess 48 may be a hole, for example. That is, the recess 48 may penetrate the first front side cover 43c. Or the recess 48 may have a bottom. That is, the recess 48 may not penetrate the first front side cover 43c. When the projection 58 enters the recess 48, the projection 58 joins the recess 48. The projection 58 and recess 48 are joined not to be positionally adjustable. The joining of the projection 58 and recess 48 joins the first front side cover 43c and first rear side cover 53a.

As a result of the fastening of the mounting seat 47 and first mounting seat 57 and the joining of the recess 48 and projection 58, the first rear side cover 53a is positioned by the first front side cover 43c. In other words, the first rear side cover 53a is disposed in a predetermined position provided by the mounting seat 47 and recess 48 of the first front side cover 43c.

Consequently, even if at least one of the cover members 43 and 53 includes a dimension error, the width D of a seam between the first front side cover 43c and first rear side cover 53a can conveniently be prevented from becoming larger than a design value. Here, the seam is, as shown, a seam between an outer surface 43cS of the first front side cover 43c and an outer surface 53aS of the first rear side cover 53a. Consequently, the seam between the first front side cover 43c and first rear side cover 53a can effectively be restrained from being conspicuous. That is, the seam between the front cover 41 and rear cover 51 can effectively be restrained from being conspicuous.

The mounting seat 47 and recess 48 are an example of the "positioning portion of the front cover for positioning the rear cover" in the present teaching. The first mounting seat 57 and projection 58 are an example of the "joint portion of the rear cover for joining the positioning portion of the front cover" in the present teaching.

### 2-5. Joining between cover members 53 included in rear cover 51

Reference is made to Figs. 1 - 3 and 6. The first rear side covers 53a are joined to the second rear side covers 53b. Consequently, the second rear side covers 53b are positioned by the first rear side covers 53a.

Reference is made to Figs. 2 and 3. Each first rear side cover 53a has a second mounting seat 59. The second mounting seat 59 is disposed behind the first mounting seat 57. The second mounting seat 59 projects inward in the transverse direction Y.

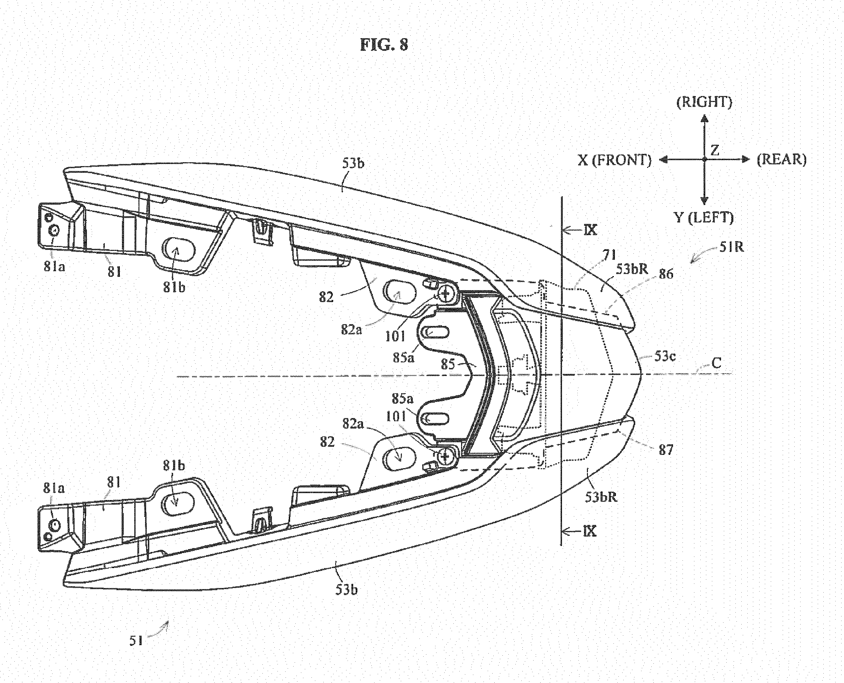

Reference is made to Figs. 2, 3, and 8. Fig. 8 is a plan view of the rear cover and taillight. Each second rear side cover 53b has a first bracket 81. The first bracket 81 projects inward in the transverse direction Y. The first bracket 81 has a circular hole 81a.

The second mounting seat 59 and first bracket 81 are fastened by a fastening member (not shown) disposed in the circular hole 81a. The circular hole 81a has no adjustment allowance for adjusting a relative position between the first rear side cover 53a and second rear side cover 53b. The second mounting seat 59 is also the same. The second mounting seat 59 and first bracket 81 are joined not to be positionally adjustable.

The right and left second rear side covers 53b are joined to the rear center cover 53c, respectively. Consequently, the rear center cover 53c is positioned by the second rear side covers 53b.

Reference is made to Figs. 2, 3, and 8. Each second rear side cover 53b has a second bracket 82. The second bracket 82 is disposed behind the first bracket 81. The second bracket 82 projects inward in the transverse direction Y.

The rear center cover 53c has a bracket 85. The bracket 85 projects forward.

Reference is made to Fig. 8. In plan view, a rear portion of the right second bracket 82 is placed on a right portion of the bracket 85. The right second bracket 82 and bracket 85 are fastened by a screw 101. Similarly, a rear portion of the left second bracket 82 is placed on a left portion of the bracket 85. The left second bracket 82 and bracket 85 are fastened by a screw 101. Consequently, the second bracket 82 and bracket 85 are joined not to be positionally adjustable.

As described above, a relative position between the cover members 53 connected to each other is determined uniquely. Consequently, the width of a seam between the cover members 53 is maintained constant. Even if at least one of the cover members 43 and cover members 53 includes a dimension error, the width of an actual seam between the cover members 53 can conveniently be prevented from becoming larger than a design value. Consequently, the seam between the cover members 53 can effectively be restrained from being conspicuous.

A dimension error of the cover members 43 and 53 will show up in the position of the rear end 51R of the rear cover 51. For example, an actual position of the rear end 51R relative to the fuel tank 31 (body frame 3) deviates from a design value. Since the front cover 41 and rear cover 51 are long in the longitudinal direction X, the position of the rear end 51R of the rear cover 51 is changeable particularly in the longitudinal direction X.

The rear cover 51 is supported by the body frame 3 to be positionally adjustable. Specifically, the second rear side covers 53b and rear center cover 53c are supported by a rear portion of the body frame 3 to be positionally adjustable, respectively. This will be described specifically hereinafter.

Reference is made to Fig. 8. Each first bracket 81 of the second rear side covers 53b has a slot 81b elongate in the longitudinal direction X in plan view. The first bracket 81 is fastened to the seat frame 6 or cross member 8 by a fastening member (not shown) penetrating the slot 81b. Similarly, each second bracket 82 has a slot 82a elongate in the longitudinal direction X in plan view. The second bracket 82 is fastened to the seat frame 6 or cross member 8 by a fastening member (not shown) penetrating the slot 82a. Consequently, each second rear side cover 53b is supported by the seat frame 6 or cross member 8 to be positionally adjustable. Therefore, even if the position of each second rear side cover 53b is shifted relative to the body frame 3, the body frame 3 can conveniently support each second rear side cover 53b.

The bracket 85 of the rear center cover 53c has two slots 85a elongate in the longitudinal direction X in plan view. The bracket 85 is fastened to the seat frame 6 or cross member 8 by a fastening member (not shown) penetrating each slot 85a. Consequently, the rear center cover 53c is supported by the seat frame 6 or cross member 8 to be positionally adjustable. Therefore, even if the position of the rear center cover 53c is shifted relative to the body frame 3, the body frame 3 can conveniently support the rear center cover 53c.

Reference is made to Fig. 8. Each second rear side cover 53b and the rear center cover 53c further have the following constructions.

The rear center cover 53c has a right edge 86 and a left edge 87. The right edge 86 overlaps the rear end 53bR of the right second rear side cover 53b in plan view. The left edge 87 overlaps the rear end 53bR of the left second rear side cover 53b in plan view. Since each rear end 53bR is located further rearward than the seat 37 in plan view, the right edge 86 and left edge 87 are also located further rearward than the seat 37 in plan view. The right edge 86 and left edge 87 are arranged below the rear ends 53bR, respectively.

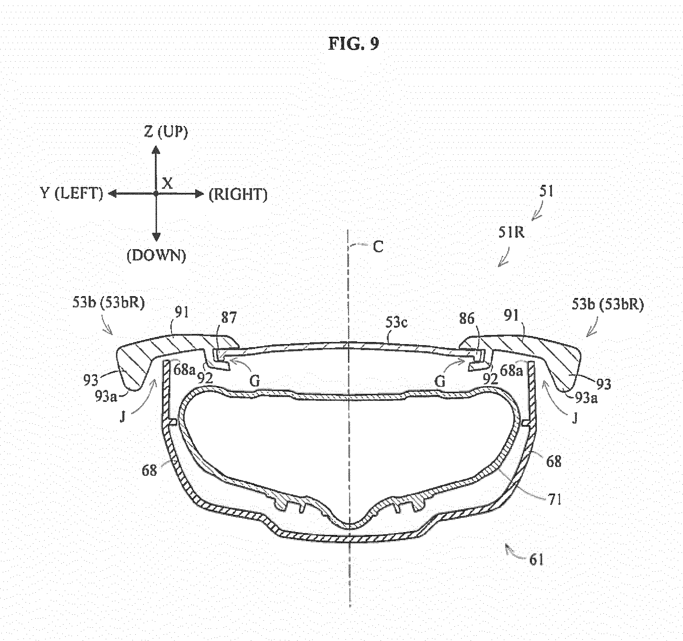

Fig. 9 is a sectional view taken along line IX-IX of Fig. 8. Each rear end 53bR has an upper wall 91 and a ledge 92. The ledge 92 extends downward from the upper wall 91, and then bends to extend inward in the transverse direction Y. A junction position of the upper wall 91 and ledge 92 is, to be exact, located further outward in the transverse direction Y than an inward end in the transverse direction Y of the upper wall 91. The upper wall 91 and ledge 92 together define a groove G. The groove G is located below the upper wall 91. The groove G opens inward in the transverse direction Y. The groove G dents further outward in the transverse direction Y than the inward end in the transverse direction Y of the upper wall 91. The right edge 86 and left edge 87 of the rear center cover 53c are inserted in the grooves G, respectively. The right edge 86 and left edge 87 are held by the ledges 92, respectively. The right edge 86 and left edge 87 have a substantially flat shape, respectively. The right edge 86 and left edge 87 are in contact with the upper walls 91, respectively.

The right second rear side cover 53b is an example of the rear right cover in the present teaching. The left second rear side cover 53b is an example of the rear left cover in the present teaching.

### 2-6. Joining of body frame 3 and protective cover 61

Reference is made to Figs. 1-3 and 6. The protective cover 61 is supported by the body frame 3. Specifically, the protective cover 61 is supported by the seat frames 6 and cross member 8.

Reference is made to Figs. 2 and 3. The protective cover 61 has a right and left pair of first mounting seats 63 and one second mounting seat 64. Each first mounting seat 63 is disposed in front of the second mounting seat 64. Each first mounting seat 63 is fastened to the seat frame 6 by a fastening member not shown. The second mounting seat 64 is fastened to the cross member 8 by a fastening member not shown. The first mounting seats 63 and second mounting seat 64 are joined to the body frame 3 not to be positionally adjustable. The protective cover 61 is therefore positioned by the body frame 3.

The positions of the body frame 3 joining the first mounting seats 63 and second mounting seat 64 are different from the position of the body frame 3 which supports the rear cover 51.

### 2-7. Joining of protective cover 61 and taillight 71

The taillight 71 is supported by the protective cover 61. Consequently, the taillight 71 is supported by the body frame 3 through the protective cover 61.

Reference is made to Figs. 2 and 3. The protective cover 61 has a right and left pair of third mounting seats 65. Each third mounting seat 65 is disposed behind the second mounting seat 64. The taillight 71 has a right and left pair of mounting seats 75. The third mounting seats 65 and mounting seats 75 are joined not to be positionally adjustable. Consequently, the taillight 71 is positioned by the protective cover 61.

### 2-8. Position shifting between rear end 51R of rear cover 51 and taillight 71

As described above, the rear cover 51 is positioned by the front cover 41, the front cover 41 is positioned by the fuel tank 31, and the fuel tank 31 is positioned by the body frame 3. On the other hand, the taillight 71 is positioned by the protective cover 61, and the protective cover 61 is positioned by the body frame 3. The taillight 71 is supported by the body frame 3 without the rear cover 51 in between. Further, the position of the body frame 3 which supports the rear cover 51 is different from the position of the body frame 3 which supports the taillight 71. Thus, the rear cover 51 and taillight 71 are separately supported by the body frame 3. The position of the rear cover 51 is therefore not bound by the taillight 71. The position of the taillight 71 is not bound by the rear cover 51, either. That is, the rear cover 51 is not positioned by the taillight 71. The taillight 71 is not positioned by the rear cover 51. In particular, the taillight 71 and the rear cover 51 are positionally adjustable relative to each other. In other words, the rear cover 51 and taillight 71 are provided movable relative to each other, especially in the longitudinal direction X. Thus, the position of the rear end 51R of the rear cover 51 is permitted to shift relative to the taillight 71.

In a strict sense, the rear cover 51 and taillight 71 are movable relative to each other at the time of assembly operation of the straddled vehicle 1. More particularly, when attaching the rear cover 51 and taillight 71, respectively, the rear cover 51 and taillight 71 are movable relative to each other. When attaching the rear cover 51 and taillight 71, respectively, a positional shifting between the rear end 51R of the rear cover 51 and the taillight 71 is permitted.

When, for example, the position of the rear end 51R of the rear cover 51 shifts relative to the body frame 3 due to a dimension error of the front cover 41 and rear cover 51, the position of the rear end 51R of the rear cover 51 shifts also relative to the protective cover 61 and taillight 71. In this case, the position of the rear cover 51 tends to shift particularly in the longitudinal direction X relative to the protective cover 61 and taillight 71.

Even when a position shifting occurs between the rear cover 51 and taillight 71, installation of the rear cover 51 is not obstructed by the taillight 71, and installation of the taillight 71 is not obstructed by the rear cover 51.

After assembly of the straddled vehicle 1 is completed, the rear cover 51 and taillight 71 are fixed directly or indirectly to the body frame 3, respectively. That is, after installation of the rear cover 51 and taillight 71 is completed, the position of the rear cover 51 is not displaced relative to the body frame 3, and the position of the taillight 71 is not displaced relative to the body frame 3, either. After installation of the rear cover 51 and taillight 71 is completed, therefore, the rear cover 51 and taillight 71 are immovable relative to each other.

### 3. Layout of rear end 51R of rear cover 51, protective cover 61, and taillight 71

Reference is made to Fig. 8. In plan view, the rear end 51R of the rear cover 51 overlaps all of the taillight 71.

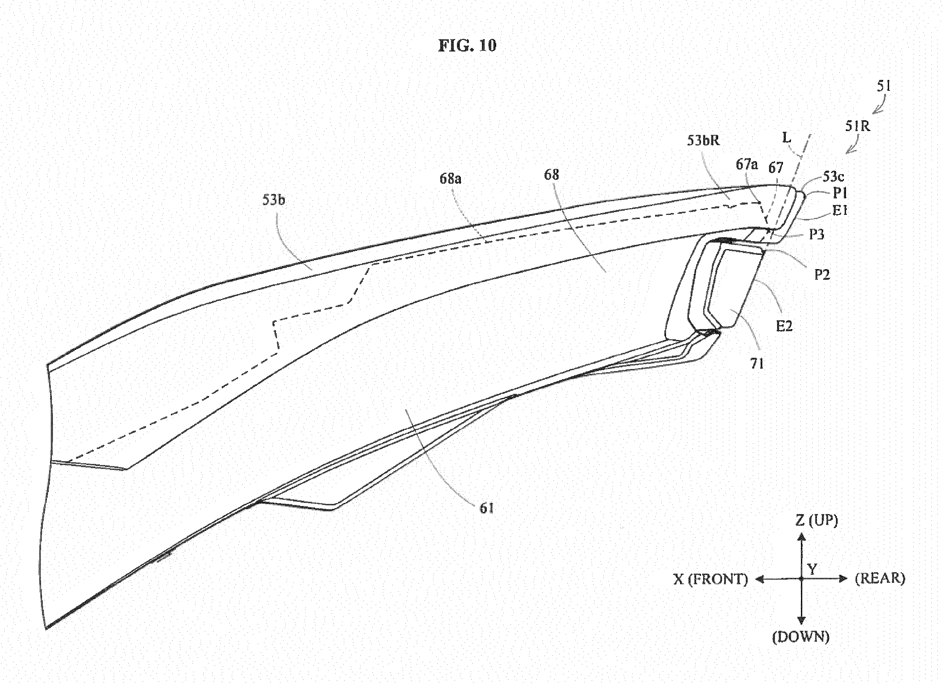

Fig. 10 is a left side view of a rear portion of the straddled vehicle 1. As described above, the rear end 51R of the rear cover 51 is disposed above the taillight 71 and protective cover 61 in the side view of the vehicle.

The rear end 51R of the rear cover 51 is located further rearward than the taillight 71 in the side view of the vehicle. In other words, the rear end 51R of the rear cover 51 extends further rearward than the taillight 71 in the side view of the vehicle. Specifically, a rear extremity P1 at the rear end 51R of the rear cover 51 is located further rearward than a rear extremity P2 of the taillight 71 in the side view of the vehicle.

In the side view of the vehicle, a rear edge E1 at the rear end 51R of the rear cover 51 extends upward and rearward. In the side view of the vehicle, the rear edge E1 at the rear end 51R of the rear cover 51 is located further rearward than the rear extremity P2 of the taillight 71. More particularly, the entire rear edge E1 is located further rearward than the rear extremity P2 of the taillight 71 in the side view of the vehicle.

In the side view of the vehicle, the taillight 71 has a rear edge E2 extending linearly. Specifically, the rear edge E2 extends rearward and upward in the side view of the vehicle. In the side view of the vehicle, the rear edge E1 at the rear end 51R is located rearward of an imaginary line L passing through the rear edge E2 of the taillight 71. The rear edge E1 is not located on the imaginary line L in the side view of the vehicle.

The rear end 51R of the rear cover 51 is located further rearward than the protective cover 61 in the side view of the vehicle. In other words, the rear end 51R of the rear cover 51 extends further rearward than the protective cover 61 in the side view of the vehicle. Specifically, the rear extremity P1 of the rear cover 51 is located further rearward than a rear extremity P3 of the protective cover 61 in the side view of the vehicle.

In the side view of the vehicle, the rear edge E1 at the rear end 51R of the rear cover 51 is located further rearward than the rear extremity P3 of the protective cover 61. More particularly, the entire rear edge E1 is located further rearward than the rear extremity P3 of the protective cover 61 in the side view of the vehicle.

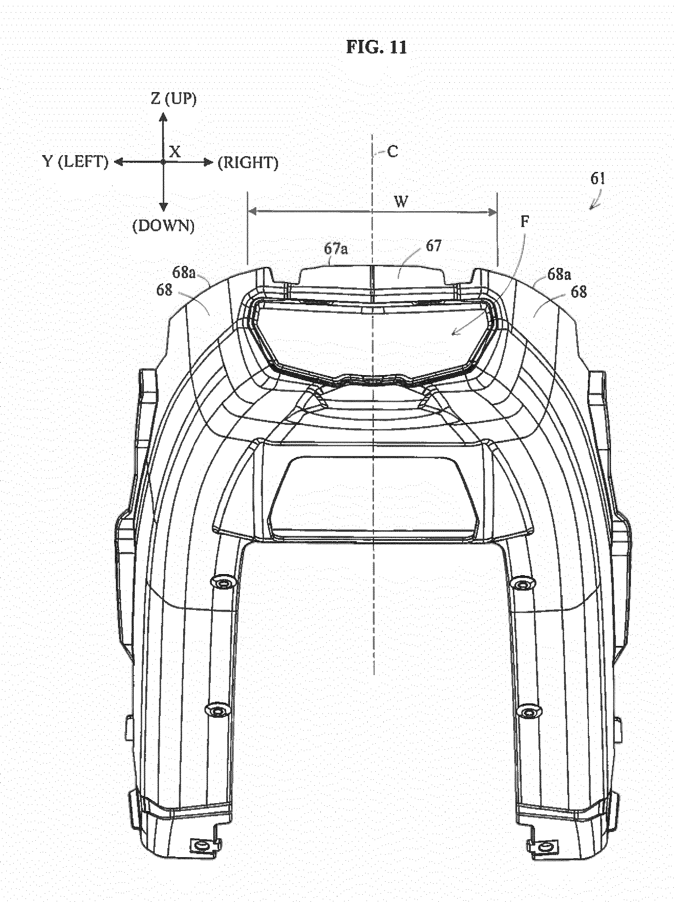

Fig. 11 is a rear view of the protective cover 61. The protective cover 61 has an upper portion (hereinafter called the "upper wall portion") 67 of a rear wall. The upper wall portion 67 is located above the opening F. The upper wall portion 67 demarcates an upper edge of the opening F. The upper wall portion 67 extends upward from the upper edge of the opening F. The upper wall portion 67 has a width W at least corresponding to that of the taillight 71 in the rear view of the vehicle.

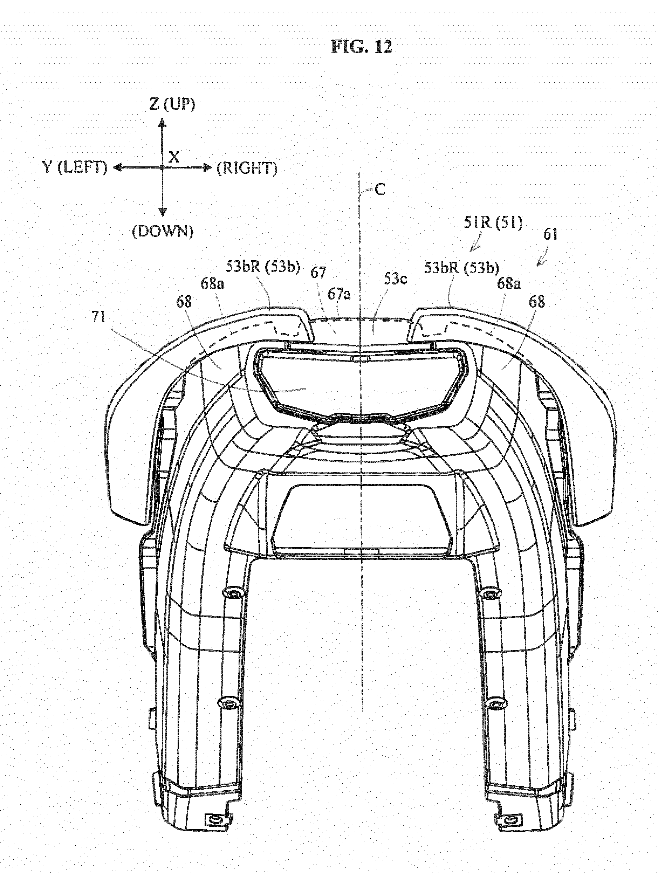

Fig. 12 is a rear view of the rear cover 51, protective cover 61, and taillight 71. The upper wall portion 67 has an upper edge 67a thereof overlapping the rear end 51R of the rear cover 51 in the rear view of the vehicle. The upper edge 67a of the upper wall portion 67 is covered by the rear end 51R of the rear cover 51 in the rear view of the vehicle. That is, the upper edge 67a of the upper wall portion 67 cannot be seen in the rear view of the vehicle.

Further, an entirety of the upper wall portion 67 overlaps the rear end 51R of the rear cover 51 in the rear view of the vehicle. The entirety of the upper wall portion 67 is covered by the rear end 51R of the rear cover 51 in the rear view of the vehicle. That is, the entirety of the upper wall portion 67 cannot be seen in the rear view of the vehicle.

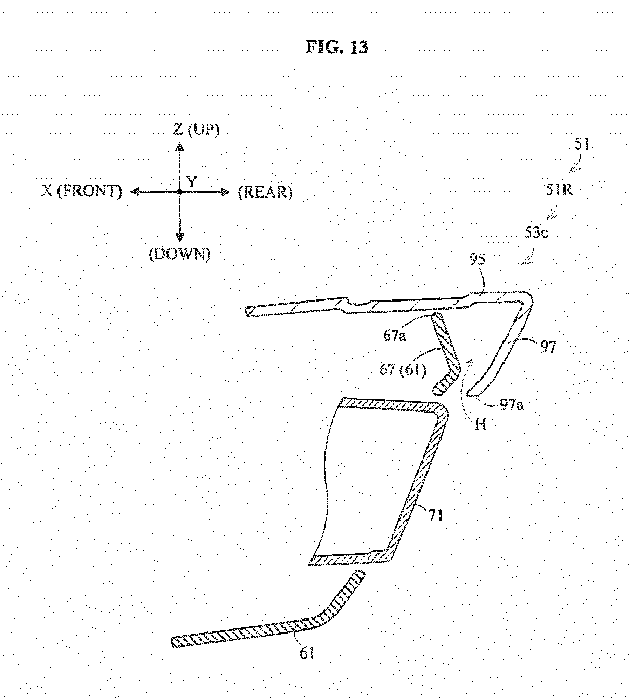

Fig. 13 is a sectional view taken along line XIII-XIII of Fig. 4. The rear center cover 53c has an upper wall 95 and a rear wall 97. These upper wall 95 and rear wall 97 define a recess H. The recess H is located below the upper wall 95 and in front of the rear wall 97. The recess H opens downward. The upper wall portion 67 of the protective cover 61 is disposed in front of the rear wall 97. The upper edge 67a of the upper wall portion 67 of the protective cover 61 is located in the recess H of the rear center cover 53c. The position of the upper edge 67a is higher than a lower edge 97a of the rear wall 97.

Reference is made to Figs. 2, 3 and 9. The protective cover 61 has a pair of right and left side walls 68. The right side wall 68 is continuous with a right part of the upper wall portion 67. The left side wall 68 is continuous with a left part of the upper wall portion 67.

Reference is made to Fig. 10. Upper edges 68a of the side walls 68 of the protective cover 61 overlap the rear cover 51 in the side view of the vehicle. The upper edges 68a of the side walls 68 are covered by the rear cover 51 in the side view of the vehicle. That is, the upper edges 68a of the side walls 68 cannot be seen in the side view of the vehicle. Only lower parts of the protective cover 61 are visible in the side view of the vehicle.

Reference is made to Fig. 9. Each second rear side cover 53b has an outer wall 93. The outer wall 93 extends downward from an outward end in the transverse direction Y of the upper wall 91. The outer wall 93 and upper wall 91 define a recess J. The recess J is located below the upper wall 91 and inward in the transverse direction Y of the outer wall 93. The recess J opens downward. The upper edge 68a of each side wall 68 of the protective cover 61 is located in the recess J of the second rear side cover 53b. The position of the upper edge 68a of each side wall 68 is higher than a lower edge 93a of the outer wall 93.

As long as dimension errors of the front cover 41 and rear cover 51 are within the limits of tolerance (maximum of permissible dimension errors), the above positional relationship between the rear end 51R of the rear cover 51 and the taillight 71 holds good. The layout of the rear end 51R of the rear cover 51 and the taillight 71 is designed to satisfy this condition. Similarly, as long as dimension errors of the front cover 41 and rear cover 51 are within the limits of tolerance, the above positional relationship between the rear end 51R of the rear cover 51 and the protective cover 61 holds good. The layout of the rear end 51R of the rear cover 51 and the protective cover 61 is designed to satisfy this condition.

Similarly, as long as dimension errors of the front cover 41 and rear cover 51 are within the limits of tolerance, the above positional relationship between the rear end 51R of the rear cover 51, the protective cover 61, and the taillight 71 holds good. The layout of the rear cover 51, the taillight 71, and the protective cover 61 is designed to satisfy this condition.

### 4. Advantageous effects

According to this embodiment, the rear cover 51 is positioned by the front cover 41. A relative position between the front cover 41 and rear cover 51 is therefore determined uniquely. Even if at least one of the front cover 41 and rear cover 51 includes a dimension error, the width of a seam between the front cover 41 and rear cover 51 can reliably be prevented from becoming large. Regardless of dimension errors, therefore, the seam between the front cover 41 and rear cover 51 can conveniently be restrained from being conspicuous. Consequently, the feeling of unity (continuity) of the front cover 41 and rear cover 51 can conveniently be restrained from being impaired.

The rear end 41R of the front cover 41 is joined to the front end 51F of the rear cover 51, and the rear cover 51 extends rearward from the front cover 41. Thus, the front cover 41 and rear cover 51 can form a large configuration flowing from the front to the rear of the straddled vehicle 1.

Similarly, since the cover members 43 included in the front cover 41 are connected to one another not to be positionally adjustable, the seams between the cover members 43 can effectively be restrained from being conspicuous. Consequently, the feeling of unity (continuity) between the cover members 43 can conveniently be restrained from being impaired.

Since the cover members 53 included in the rear cover 51 are connected to one another not to be positionally adjustable, the seams between the cover members 53 can effectively be restrained from being conspicuous. Consequently, the feeling of unity (continuity) between the cover members 53 can conveniently be restrained from being impaired.

The main frame 5 positions the fuel tank 31, the fuel tank 31 positions the front cover 41, and the front cover 41 positions the rear cover 51. Due to dimension errors of the front cover 41 and rear cover 51, therefore, the position of the rear end 51R of the rear cover 51 shifts relative to the body frame 3. On the other hand, the rear cover 51 is not positioned by the taillight 71. In other words, the taillight 71 is supported by the body frame 3 to be movable relative to the rear cover 51. In particular, the taillight 71 and the rear cover 51 are positionally adjustable relative to each other. Therefore, when the position of the rear end 51R of the rear cover 51 shifts relative to the body frame 3, the position of the rear end 51R of the rear cover 51 will shift also relative to the taillight 71. However, the rear end 51R of the rear cover 51 is located further rearward than the taillight 71. Therefore, even if a position shifting occurs between the rear end 51R of the rear cover 51 and the taillight 71, the position shifting between the rear end 51R of the rear cover 51 and the taillight 71 can effectively be restrained from being conspicuous.

The rear cover 51 is not positioned by the taillight 71. The taillight 71 is supported by the body frame 3 to be movable relative to the rear cover 51. In particular, the taillight 71 and the rear cover 51 are positionally adjustable relative to each other. Therefore, even if the position of the rear end 51R of the rear cover 51 shifts relative to the body frame 3, the position of the rear end 51R of the rear cover 51 can conveniently be permitted to shift relative to the taillight 71, and the position of the taillight 71 can effectively be restrained from shifting relative to the body frame 3. Therefore, the visibility of the taillight 71 can be secured conveniently.

Since the rear cover 51 does not support the taillight 71, the rear cover 51 can conveniently be reduced in size. Further, the degree of freedom of shape and design of the rear cover 51 can be increased.

The taillight 71 is supported by the body frame 3 without the rear cover 51 in between. The taillight 71 can therefore conveniently be provided movable relative to the rear cover 51.

The body frame 3 supports the rear cover 51 to be positionally adjustable. The body frame 3 can therefore support the rear cover 51, while permitting the position of the rear end 51R of the rear cover 51 to shift relative to the body frame 3.

The body frame 3 supports the taillight 71 in a different position from the position for supporting the rear cover 51. This can conveniently permit the rear cover 51 and taillight 71 to move relative to each other.

Since the rear end 51R of the rear cover 51 overlaps all of the taillight 71 in plan view, a position shifting between the rear end 51R of the rear cover 51 and the taillight 71 can with increased effect be restrained from being conspicuous.

Since the rear edge E1 of the rear end 51R of the rear cover 51 is located further rearward than the rear extremity P2 of the taillight 71 in the side view of the vehicle, a position shifting between the rear end 51R of the rear cover 51 and the taillight 71 can with increased effect be restrained from being conspicuous.

The rear edge E2 of the taillight 71 extends linearly in the side view of the vehicle, and the rear edge E1 of the rear cover 51 is located rearward of the imaginary line L passing through the rear edge E2 of the taillight 71 in the side view of the vehicle. This can with increased effect restrain a position shifting between the rear end 51R of the rear cover 51 and the taillight 71 from being conspicuous.

Since the rear end 51R of the rear cover 51 is disposed above the taillight 71, a position shifting between the rear end 51R of the rear cover 51 and the taillight 71 can with increased effect be restrained from being conspicuous.

Since the rear end 51R of the rear cover 51 is disposed above the taillight 71, and the rear edge E1 of the rear cover 51 extends rearward and upward in the side view of the vehicle, the light of the taillight 71 can conveniently be prevented from being blocked by the rear end 51R of the rear cover 51. That is, the visibility of the taillight 71 can be secured conveniently.

The straddled vehicle 1, with the protective cover 61 interposed between the body frame 3 and taillight 71, can support the taillight 71 conveniently. Since the protective cover 61 is supported by the body frame 3, when the position of the rear end 51R of the rear cover 51 shifts relative to the body frame 3, the position of the rear end 51R of the rear cover 51 shifts also relative to the protective cover 61. However, since the rear end 51R of the rear cover 51 extends further rearward than the protective cover 61, a position shifting between the rear end 51R of the rear cover 51 and the protective cover 61 can effectively be restrained from being conspicuous.

Since the rear edge E1 of the rear end 51R of the rear cover 51 is located further rearward than the rear extremity P3 of the protective cover 61 in the side view of the vehicle, a position shifting between the rear end 51R of the rear cover 51 and the protective cover 61 can with increased effect be restrained from being conspicuous.

Since the upper edge 68a of each side wall 68 of the protective cover 61 overlaps the rear cover 51 in the side view of the vehicle, a position shifting between the rear cover 51 and the protective cover 61 can with increased effect be restrained from being conspicuous.

Part of the protective cover 61 is disposed below the rear end 51R of the rear cover 51. The protective cover 61 has the upper wall portion 67 bulging upward from the upper surface of the taillight 71. The upper wall portion 67 has the width W at least corresponding to that of the taillight 7 in a rear view of the vehicle. The upper edge 67a of the upper wall portion 67 overlaps the rear end 51R of the rear cover 51 in the rear view of the vehicle. Thus, the upper wall portion 67 can with increased effect restrain a position shifting between the rear end 51R of the rear cover 51 and the taillight 71 from being conspicuous.

Since the fuel tank 31 positions the opening A and mounting seat 46 of the front cover 41, the positions of the opening A and mounting seat 46 of the front cover 41 relative to the fuel tank 31 can be determined uniquely. In this way, the fuel tank 31 can position the front cover 41 conveniently.

Especially since the opening A has substantially the same size as the cap 35, the cap 35 can position the opening A conveniently. Consequently, the fuel tank 31 can position the front cover 41 all the more conveniently.

The mounting seat 47 and recess 48 of the front cover 41 join the first mounting seat 57 and projection 58 of the rear cover 51 to position the first mounting seat 57 and projection 58. The front cover 41 can therefore position the rear cover 51 conveniently.

Especially since the projection 58 of the rear cover 51 projects inward in the transverse direction Y and the recess 48 of the front cover 41 can join the projection 58, the front cover 41 and rear cover 51 can conveniently be restrained from swelling in the transverse direction Y. If the projection of the rear cover 51 projects in a direction perpendicular to the transverse direction Y, it will be necessary for the rear cover 51 to have a turnback portion turned back inward in the transverse direction Y, and for this turnback portion to form a projection thereon. Further, it will be necessary for the front cover 41 also to have a turnback portion turned back inward in the transverse direction Y, and for this turnback portion to form a recess therein. On the other hand, since the projection 58 projects inward in the transverse direction Y in this embodiment, there is no need for the front cover 41 and rear cover 51 to have the above turnback portions, respectively. The front cover 41 and rear cover 51 can therefore be reduced in size in the transverse direction Y.

Since the front cover 41 is constructed of a plurality of cover members 43, the shape of each cover member 43 can be simplified. Each cover member 43 can therefore be formed easily.

Similarly, since the rear cover 51 is constructed of a plurality of cover members 53, the shape of each cover member 53 can be simplified. Each cover member 53 can therefore be formed easily.

Especially since the second rear side covers 53b are shaped to extend substantially linearly in the longitudinal direction X, the strength of the second rear side covers 53b can be secured easily. The second rear side covers 53b can therefore conveniently exhibit the function as grab bars.

The right edge 86 of the rear center cover 53c overlaps the right second rear side cover 53b in a position rearward of the seat 37 in plan view. Further, the right edge 86 is disposed below the rear end 53bR of the second rear side cover 53b. This can conveniently restrain the seam between the rear center cover 53c and the rear end 53bR of the right second rear side cover 53b from being conspicuous. Similarly, the left edge 87 of the rear center cover 53c overlaps the left second rear side cover 53b in a position rearward of the seat 37 in plan view. Further, the left edge 87 is disposed below the rear end 53bR of the second rear side cover 53b. This can conveniently restrain the seam between the rear center cover 53c and the rear end 53bR of the left second rear side cover 53b from being conspicuous.

Since the right edge 86 and left edge 87 are in contact with the upper walls 91 of the rear ends 53bR, gaps between the rear center cover 53c and rear ends 53bR can be made small effectively. The seams between the rear center cover 53c and rear ends 53bR can therefore be restrained from being conspicuous.

Since the rear ends 53bR have grooves G, the right edge 86 and left edge 87 can be held easily. The construction of the rear ends 53bR and rear center cover 53c can therefore be simplified.

The right edge 86 and left edge 87 have no projections, recesses, or brackets for joining with the rear ends 53bR. Similarly, the rear ends 53bR have no projections, recesses, or brackets for joining with the rear center cover 53c (including the right edge 86 and left edge 87). The rear ends 53bR and rear center cover 53c can therefore easily be reduced in size. For example, the rear ends 53bR and rear center cover 53c can easily be reduced in thickness.

Since the front end 41F of the front cover 41 is located forward of the oil filler 33 in the side view of the vehicle, the entirety of the front cover 41 and rear cover 51 is elongate in the longitudinal direction X. The front cover 41 and rear cover 51 can therefore form a large configuration continuous from front to rear.

Further, since the front end 41F of the front cover 41 is located forward of the fuel tank 31 in the side view of the vehicle, the entirety of the front cover 41 and rear cover 51 is all the longer in the longitudinal direction X. Thus, the front cover 41 and rear cover 51 can form a still larger configuration flowing from front to rear.
(1) In the foregoing not claimed embodiment, the fuel tank 31 positions both the opening A and mounting seat 46 of the front cover 41. Alternatively, the fuel tank 31 may position only one of the opening A and mounting seat 46 of the front cover 41.
(2) In the foregoing not claimed embodiment, the cap 35 of the fuel tank 31 positions the front cover 41. Alternatively, the filler pipe 34 of the fuel tank 31 may position the front cover 41.
(3) In the foregoing not claimed embodiment, the front cover 41 is positioned by the fuel tank 31. Alternatively, the front cover 41 may be positioned by at least one of the body frame 3 and fuel tank 31. For example, the front cover 41 may be positioned by the body frame 3. For example, the front cover 41 may be positioned by the main frames 5. For example, the front cover 41 may be positioned by the body frame 3 and fuel tank 31.
(4) In the foregoing not claimed embodiment, the taillight 71 is positioned by the protective cover 61. Alternatively, the taillight 71 may be supported to be positionally adjustable by the protective cover 61. In this modified embodiment also, the rear cover 51 and taillight 71 are separately supported by the body frame 3. The position of the taillight 71 is therefore not influenced by dimension errors of the front cover 41 and rear cover 51. Even if the position of the rear end 51R of the rear cover 51 shifts relative to the body frame 3 due to a dimension error, the position of the taillight 71 can effectively be restrained from shifting relative to the body frame 3.
(5) In the foregoing not claimed embodiment, the rear end 51R of the rear cover 51 is disposed above the taillight 71. Alternatively, the rear end 51R of the rear cover 51 may be disposed below the taillight 71.
(6) In the foregoing not claimed embodiment, at least one of the body frame 3, fuel tank 31 and other components may support the front cover 41 to be positionally adjustable, in a position other than the opening A and mounting seat 46. According to this construction, even if the cover members 43 include dimension errors, the cover members 43 can be supported conveniently.
(7) In the foregoing not claimed embodiment, the front cover 41 is constructed of a plurality of cover members 43. Alternatively, the front cover 41 may be constructed of a single cover member. Similarly, the rear cover 51 is constructed of a plurality of cover members 53. Alternatively, the rear cover 51 may be constructed of a single cover member.
(8) In the foregoing not claimed embodiment, the straddled vehicle 1 has been illustrated as an example of street type vehicles. Alternatively, the straddled vehicle 1 may be changed to vehicles of other types, such as the sport type or a vehicle for irregular grounds (ALL-TERRAIN VEHICLE).
(9) In the foregoing not claimed embodiment, the number of front wheels 17 is one. Alternatively, the number of front wheels 17 may be changed to two. In the foregoing embodiment, the number of rear wheels 29 is one. Alternatively, the number of rear wheels 29 may be changed to two.
(10) In the foregoing not claimed embodiment, an engine (internal combustion engine) has been illustrated as power source. Alternatively, the straddled vehicle 1 may have an electric motor as power source.
(11) In the foregoing not claimed embodiment, part of the front cover 41 is disposed below the fuel tank 31 and seat 37 in the side view of the vehicle. Alternatively, at least part of the front cover 41 may be disposed below at least one of the fuel tank 31 and seat 37 in the side view of the vehicle. For example, at least part of the front cover 41 may be disposed below either one of the fuel tank 31 and seat 37 in the side view of the vehicle. For example, part or all of the front cover 41 may be disposed below the fuel tank 31 in the side view of the vehicle. For example, part or all of the front cover 41 may be disposed below the seat 37 in the side view of the vehicle. For example, part or all of the front cover 41 may be disposed below the fuel tank 31 and seat 37 in the side view of the vehicle.
(12) In the foregoing not claimed embodiment, the main frames 5 may be a box frame. For example, the main frames 5 may have a sectional outer shape which is oblong and approximately quadrangular, approximately pentagonal, or approximately polygonal. Or in the foregoing embodiment, the main frames 5 may be pipe frames. For example, the main frames 5 may have a sectional outer shape which is approximately circular.
(13) In the foregoing not claimed embodiment, the entire upper wall portion 67 is invisible in the rear view of the vehicle. Alternatively, only a lower part of the upper wall portion 67 may be visible in the rear view of the vehicle. According to this construction, the upper wall portion 67 is disposed in a gap between the rear end 51R of the rear cover 51 and the taillight 71 in the rear view of the vehicle. A position shifting between the rear end 51R of the rear cover 51 and the taillight 71 can therefore all the more effectively be restrained from being conspicuous.
(14) The foregoing not claimed embodiment and each of the modified embodiments described in paragraphs (1) to (13) above may be further varied as appropriate by replacing or combining their constructions with the constructions of the other modified embodiments.

## Claims

1. A straddled vehicle (1) comprising:
a body frame (3);
a fuel tank (31) supported by the body frame (3);
a seat (37) disposed behind the fuel tank (31) and supported by the body frame (3);
a taillight (71) supported by the body frame (3), and having at least part thereof disposed further rearward than the seat (37);
a front cover (41) having at least part thereof disposed below at least one of the fuel tank (31) and the seat (37) in a side view of the vehicle; and
a rear cover (51) extending rearward from the front cover (41), and having at least part thereof disposed below the seat (37) in the side view of the vehicle;
wherein
the fuel tank (31) is positioned by the body frame (3);
the front cover (41) is positioned by at least one of the body frame (3) and the fuel tank (31);
the rear cover (51) has a rear end (51R) thereof located further rearward than the taillight (71), wherein
the rear cover (51) is joined to the front cover (41), and
the rear cover (51) is positioned by the front cover (41) through a front end (51F) of the rear cover (51) joined to a rear end (41R) of the front cover (41), wherein the front cover (41) and the rear cover (51) are joined by fastening rear end (41R) of the front cover (41) and the front end (51F) of the rear cover (51) together, **characterized in that**
a relative position between the front cover (41) and the rear cover (51) is determined uniquely,
dimension errors of the front cover (41) and rear cover (51) result in a shift of a position of the rear end (51R) of the rear cover (51) relative to the body frame (3).

2. A straddled vehicle (1) according to claim 1, **characterized in that** the body frame (3) supports the rear cover (51) to be positionally adjustable, and supports the taillight (71) in a position different from a position for supporting the rear cover (51).

3. A straddled vehicle (1) according to claim 1 or 2, **characterized in that** the rear end (51R) of the rear cover (51) overlaps all of the taillight (71) in plan view.

4. A straddled vehicle (1) according to any one of claims 1 to 3, **characterized in that** the rear end (51R) of the rear cover (51) has a rear edge (E1).

5. A straddled vehicle (1) according to claim 4, **characterized in that** the rear edge (E1) of the rear cover (51) is located further rearward than a rear extremity (P2) of the taillight (71) in the side view of the vehicle.

6. A straddled vehicle (1) according to claim 4 or 5, **characterized in that** the taillight (71) has a rear edge (E2) thereof extending linearly in the side view of the vehicle; and
the rear edge (E1) of the rear cover (51) is located further rearward than an imaginary line (L) passing through the rear edge (E2) of the taillight (71) in the side view of the vehicle.

7. A straddled vehicle (1) according to any one of claims 4 to 6, **characterized in that** the rear edge (E1) of the rear cover (51) extends rearward and upward in the side view of the vehicle.

8. A straddled vehicle (1) according to any one of claims 1 to 7, **characterized in that** the rear end (51R) of the rear cover (51) is disposed above the taillight (71).

9. A straddled vehicle (1) according to any one of claims 1 to 8, **characterized by** further comprising a protective cover (61) supported by the body frame (3);
wherein the taillight (71) is supported by the body frame (3) through the protective cover (61); and
the rear end (51R) of the rear cover (51) extends further rearward than the protective cover (61).

10. A straddled vehicle (1) according to claim 9, **characterized in that:**
at least part of the protective cover (61) is disposed below the rear end (51R) of the rear cover (51);
the protective cover (61) has an upper wall portion (67) bulging upward from an upper surface of the taillight (71);
the upper wall portion (67) has a width (W) at least corresponding to a width of the taillight (71) in a rear view of the vehicle; and
the upper wall portion (67) has an upper edge (67a) thereof overlapping the rear end (51R) of the rear cover (51) in the rear view of the vehicle.

11. A straddled vehicle (1) according to any one of claims 1 to 10, **characterized in that:**
the front cover (41) has a joint portion (46, A) for joining the fuel tank (31); and
the fuel tank (31) positions the joint portion (46, A) of the front cover (41).

12. A straddled vehicle (1) according to claim 11, **characterized in that:**
the fuel tank (31) includes:
a fuel tank body (32); and
an oil filler (33) projecting upward from the fuel tank body (32);
wherein the joint portion (46, A) of the front cover (41) includes an opening (A) substantially the same size as the oil filler (33); and
the oil filler (33) is disposed in the opening (A).

13. A straddled vehicle (1) according to any one of claims 1 to 12, **characterized in that:**
the rear cover (51) has a joint portion (57, 58) for joining the front cover (41); and
the front cover (41) has a positioning portion (47, 48) for joining the joint portion (57, 58) of the rear cover (51), and positioning the joint portion (57, 58) of the rear cover (51).

14. A straddled vehicle (1) according to claim 13, **characterized in that:**
one of the positioning portion (47, 48) of the front cover (41) and the joint portion (57, 58) of the rear cover (51) is a projection (58) projecting inward of a transverse direction (Y) of the straddled vehicle (1); and
the other of the positioning portion (47, 48) of the front cover (41) and the joint portion (57, 58) of the rear cover (51) is a recess (48) engageable with the projection (58).

15. A straddled vehicle (1) according to any one of claims 1 to 14, **characterized in that:**
the rear cover (51) includes:
a rear right cover (53b) disposed rightward of the seat (37) in plan view;
a rear left cover (53b) disposed leftward of the seat (37) in plan view; and
a rear center cover (53c) disposed rearward of the seat (37) in plan view, and joined to the rear right cover (53b) and the rear left cover (53b);
the rear right cover (53b) extending further rearward than the seat (37);
the rear left cover (53b) extending further rearward than the seat (37);
the rear center cover (53c) being disposed leftward of the rear right cover (53b), and
rightward of the rear left cover (53b); and
the rear center cover (53c) includes:
a right edge (86) overlapping the rear right cover (53b) in a position rearward of the seat (37) in plan view; and
a left edge (87) overlapping the rear left cover (53b) in a position rearward of the seat (37) in plan view;
the right edge (86) being disposed below the rear right cover (53b);
the left edge (87) being disposed below the rear left cover (53b).

## Patentansprüche

1. Ein Spreiz-Sitz-Fahrzeug (1), das umfasst:
einen Körper-Rahmen (3);
einen Kraftstoff-Tank (31), der vom Körper-Rahmen (3) gelagert ist;
einen Sitz (37), der hinter dem Kraftstoff-Tank (31) angeordnet ist und von dem Körper-Rahmen (3) gelagert ist;
ein Rück-Licht (71), das von dem Körper-Rahmen (3) gelagert ist, und das zumindest ein Teil hat, weiter hinten als der Sitz (37) angeordnet ist;
eine Vorder-Abdeckung (41), die zumindest ein Teil hat, der unter zumindest einem von dem Kraftstoff-Tank (31) und dem Sitz (37), in einer Seiten-Ansicht des Fahrzeugs, angeordnet ist; und
eine Rück-Abdeckung (51), die sich nach hinten von der Vorder-Abdeckung (41) erstreckt, und die zumindest einen Teil hat, der unter dem Sitz (37), in der Seiten-Ansicht des Fahrzeugs, angeordnet ist;
wobei
der Kraftstoff-Tank (31) durch den Körper-Rahmen (3) positioniert ist;
die Vorder-Abdeckung (41) durch zumindest einen von dem Körper-Rahmen (3) und dem Kraftstoff-Tank (31) positioniert ist;
die Rück-Abdeckung (51) ein hinteres Ende (51R) hat, das weiter hinten als das Rück-Licht (71) angeordnet ist, wobei
die Rück-Abdeckung (51) mit der Vorder-Abdeckung (41) verbunden ist, und
die Rück-Abdeckung (51) von der Vorder-Abdeckung (41) durch ein vorderes Ende (51F) der Rück-Abdeckung (51) positioniert ist, das mit einem hinteren Ende (41R) der Vorder-Abdeckung (41) verbunden ist, wobei die Vorder-Abdeckung (41) und die Rück-Abdeckung (51) durch Befestigen des hinteren Endes (41R) der Vorder-Abdeckung (41) und des vorderen Endes (51F) der Rück-Abdeckung (51) miteinander verbunden sind, **dadurch gekennzeichnet, dass** eine relative Position zwischen der Vorder-Abdeckung (41) und der Rück-Abdeckung (51) eindeutig bestimmt wird,
Abmessungsfehler der Vorder-Abdeckung (41) und der Rück-Abdeckung (51) führen zu einer Verschiebung der Position des hinteren Endes (51R) der Rück-Abdeckung (51) in Bezug auf den Körper-Rahmen (3).

2. Ein Spreiz-Sitz-Fahrzeug (1) gemäß Anspruch 1, **dadurch gekennzeichnet, dass** der Körper-Rahmen (3) die Rück-Abdeckung (51) positions-einstellbar lagert und das Rück-Licht (71) in einer verschiedenen Position von der Position zur Lagerung der Rück-Abdeckung (51) lagert.

3. Ein Spreiz-Sitz-Fahrzeug (1) gemäß Anspruch 1 oder 2, **dadurch gekennzeichnet, dass** das hintere Ende (51R) der Rück-Abdeckung (51) in der Draufsicht das gesamte Rück-Licht (71) überdeckt.

4. Ein Spreiz-Sitz-Fahrzeug (1) gemäß einem der Ansprüche 1 bis 3, **dadurch gekennzeichnet, dass** das hintere Ende (51R) der Rück-Abdeckung (51) eine Hinter-Kante (E1) hat.

5. Ein Spreiz-Sitz-Fahrzeug (1) gemäß Anspruch 4, **dadurch gekennzeichnet, dass** die Hinter-Kante (E1) der Rück-Abdeckung (51) weiter hinten angeordnet ist als ein hinteres Ende (P2) des Rück-Lichts (71) in der Seiten-Ansicht des Fahrzeugs.

6. Ein Spreiz-Sitz-Fahrzeug (1) gemäß Anspruch 4 oder 5, **dadurch gekennzeichnet, dass** das Rück-Licht (71) eine Hinter-Kante (E2) hat, die sich in der Seiten-Ansicht des Fahrzeugs linear erstreckt; und
die Hinter-Kante (E1) der Rück-Abdeckung (51) weiter hinten liegt als eine gedachte Linie (L), die durch die Hinter-Kante (E2) des Rück-Lichts (71) in der Seiten-Ansicht des Fahrzeugs verläuft.

7. Ein Spreiz-Sitz-Fahrzeug (1) gemäß einem der Ansprüche 4 bis 6, **dadurch gekennzeichnet, dass** sich die Hinter-Kante (E1) der Rück-Abdeckung (51) in der Seiten-Ansicht des Fahrzeugs nach hinten und oben erstreckt.

8. Ein Spreiz-Sitz-Fahrzeug (1) gemäß einem der Ansprüche 1 bis 7, **dadurch gekennzeichnet, dass** das hintere Ende (51R) der Rück-Abdeckung (51) oberhalb des Rück-Lichts (71) angeordnet ist.

9. Ein Spreiz-Sitz-Fahrzeug (1) gemäß einem der Ansprüche 1 bis 8, **gekennzeichnet durch** eine Schutz-Abdeckung (61), die durch den Körper-Rahmen (3) gelagert ist; wobei das Rück-Licht (71) von dem Körper-Rahmen (3) durch die Schutz-Abdeckung (61) gelagert ist; und
das hintere Ende (51R) der Rück-Abdeckung (51) sich weiter nach hinten erstreckt als die Schutz-Abdeckung (61).

10. Ein Spreiz-Sitz-Fahrzeug (1) gemäß Anspruch 9, **dadurch gekennzeichnet, dass:**
zumindest ein Teil der Schutz-Abdeckung (61) unterhalb des hinteren Endes (51R) der Rück-Abdeckung (51) angeordnet ist;
die Schutz-Abdeckung (61) einen oberen Wand-Abschnitt (67) hat, der sich von einer oberen Fläche des Rück-Lichts (71) nach oben wölbt;
der obere Wand-Abschnitt (67) eine Breite (W) hat, die zumindest einer Breite des Rück-Lichts (71) in einer Rück-Ansicht des Fahrzeugs entspricht; und
der obere Wand-Abschnitt (67) mit einer Ober-Kante (67a) das hintere Ende (51R) der Rück-Abdeckung (51) in der Rück-Ansicht des Fahrzeugs überlappt.

11. Ein Spreiz-Sitz-Fahrzeug (1) gemäß einem der Ansprüche 1 bis 10, **dadurch gekennzeichnet, dass:**
die Vorder-Abdeckung (41) einen Verbindungs-Abschnitt (46, A) zur Verbindung mit dem Kraftstoff-Tank (31) hat; und
der Kraftstoff-Tank (31) den Verbindungs-Abschnitt (46, A) der Vorder-Abdeckung (41) positioniert.

12. Ein Spreiz-Sitz-Fahrzeug (1) gemäß Anspruch 11, **dadurch gekennzeichnet, dass:**
der Kraftstoff-Tank (31) beinhaltet:
einen Kraftstoff-Tank-Körper (32); und
einen Kraftstoff-Einfüllstutzen (33), der aus dem Kraftstoff-Tank-Körper (32) nach oben ragt;
wobei der Verbindungs-Abschnitt (46, A) der Vorder-Abdeckung (41) eine Öffnung (A) beinhaltet, die im Wesentlichen die gleiche Größe hat wie der Kraftstoff-Einfüllstutzen (33); und
der Kraftstoff-Einfüllstutzen (33) in der Öffnung (A) angeordnet ist.

13. Ein Spreiz-Sitz-Fahrzeug (1) gemäß einem der Ansprüche 1 bis 12, **dadurch gekennzeichnet, dass:**
die Rück-Abdeckung (51) einen Verbindungs-Abschnitt (57, 58) zur Verbindung mit der Vorder-Abdeckung (41) hat; und
die Vorder-Abdeckung (41) einen Positionierungs-Abschnitt (47, 48) zum Verbinden des Verbindungs-Abschnitts (57, 58) der Rück-Abdeckung (51) und zum Positionieren des Verbindungs-Abschnitts (57, 58) der Rück-Abdeckung (51) hat.

14. Ein Spreiz-Sitz-Fahrzeug (1) gemäß Anspruch 13, **dadurch gekennzeichnet, dass:**
einer von dem Positionierungs-Abschnitt (47, 48) der Vorder-Abdeckung (41) und dem Verbindungs-Abschnitt (57, 58) der Rück-Abdeckung (51) ein Vorsprung (58) ist, der in einer Querrichtung (Y) des Spreiz-Sitz-Fahrzeug (1) nach innen ragt; und
der andere der Positionierungs-Abschnitte (47, 48) der Vorder-Abdeckung (41) und des Verbindungs-Abschnitts (57, 58) der Rück-Abdeckung (51) eine Aussparung (48) ist, die mit dem Vorsprung (58) in Eingriff bringbar ist.

15. Ein Spreiz-Sitz-Fahrzeug (1) gemäß einem der Ansprüche 1 bis 14, **dadurch gekennzeichnet, dass:**
die Rück-Abdeckung (51) beinhaltet:
eine hintere rechte Abdeckung (53b), die in der Draufsicht rechts vom Sitz (37) angeordnet ist;
eine hintere linke Abdeckung (53b), die in der Draufsicht links vom Sitz (37) angeordnet ist; und
eine hintere mittlere Abdeckung (53c), die in der Draufsicht hinter dem Sitz (37) angeordnet und mit der hinteren rechten Abdeckung (53b) und der hinteren linken Abdeckung (53b) verbunden ist;
die hintere rechte Abdeckung (53b) erstreckt sich weiter nach hinten als der Sitz (37);
die hintere linke Abdeckung (53b) erstreckt sich weiter nach hinten als der Sitz (37);
die hintere mittlere Abdeckung (53c) links von der hinteren rechten Abdeckung (53b) und rechts von der hinteren linken Abdeckung (53b) angeordnet ist; und
die hintere mittlere Abdeckung (53c) beinhaltet:
eine rechte Kante (86), welche die hintere rechte Abdeckung (53b) in einer Position hinter dem Sitz (37) in der Draufsicht überlappt; und
eine linke Kante (87), welche die hintere linke Abdeckung (53b) in einer Position hinter dem Sitz (37) in der Draufsicht überlappt;
die rechte Kante (86) ist unterhalb der hinteren rechten Abdeckung (53b) angeordnet;
die linke Kante (87) ist unterhalb der hinteren linken Abdeckung (53b) angeordnet.

## Revendications

1. Véhicule à selle (1) comprenant :
un cadre (3),
un réservoir de carburant (31) supporté par le cadre (3),
un siège (37) disposé derrière le réservoir de carburant (31) et supporté par le cadre (3),
un feu arrière (71) supporté par le cadre (3) et dont une partie est disposée plus en arrière que le siège (37),
un capot avant (41) dont au moins une partie est disposée en dessous d'au moins l'un parmi le réservoir de carburant (31) et le siège (37) selon une vue latérale du véhicule, et
un capot arrière (51) s'étendant vers l'arrière depuis le capot avant (41) et dont au moins une partie est disposée en dessous du siège (37) selon la vue latérale du véhicule,
dans lequel
le réservoir de carburant (31) est positionné par le cadre (3),
le capot avant (41) est positionné au moins par le cadre (3) et le réservoir de carburant (31),
le capot arrière (51) a son extrémité arrière (51R) située plus en arrière que le feu arrière (71), où
le capot arrière (51) est réuni au capot avant (41), et
le capot arrière (51) est positionné par le capot avant (41) au travers de l'extrémité avant (51F) du capot arrière (51) réunie à l'extrémité arrière (41R) du capot avant (41), le capot avant (41) et le capot arrière (51) sont réunis en assemblant l'extrémité arrière (41R) du capot avant (41) et l'extrémité avant (51F) du capot arrière (51), **caractérisé en ce que** :
la position relative entre le capot avant (41) et le capot arrière (51) est déterminée de manière unique,
des erreurs de dimension du capot avant (41) et du capot arrière (51) résultent en un décalage de la position de l'extrémité arrière (51R) du capot arrière (51) par rapport au cadre (3).

2. Véhicule à selle (1) selon la revendication 1, **caractérisé en ce que** le cadre (3) supporte le capot arrière (51) pour qu'il soit ajustable en position, et il supporte le feu arrière (71) dans une position différente de la position de support du capot arrière (51).

3. Véhicule à selle (1) selon la revendication 1 ou la revendication 2, **caractérisé en ce que** l'extrémité arrière (51R) du capot arrière (51) chevauche la totalité du feu arrière (71) selon une vue en plan.

4. Véhicule à selle (1) selon l'une quelconque des revendications 1 à 3, **caractérisé en ce que** l'extrémité arrière (51R) du capot arrière (51) possède un bord arrière (E1) .

5. Véhicule à selle (1) selon la revendication 4, **caractérisé en ce que** le bord arrière (E1) du capot arrière (51) est situé plus en arrière que l'extrémité arrière (P2) du feu arrière (71) selon la vue latérale du véhicule.

6. Véhicule à selle (1) selon la revendication 4 ou la revendication 5, **caractérisé en ce que** le feu arrière (71) a son bord arrière (E2) qui s'étend linéairement selon la vue latérale du véhicule, et
le bord arrière (E1) du capot arrière (51) est situé plus en arrière qu'une droite imaginaire (L) traversant le bord arrière (E2) du feu arrière (71) selon la vue latérale du véhicule.

7. Véhicule à selle (1) selon l'une quelconque des revendications 4 à 6, **caractérisé en ce que** le bord arrière (E1) du capot arrière (51) s'étend vers l'arrière et vers le haut selon la vue latérale du véhicule.

8. Véhicule à selle (1) selon l'une quelconque des revendications 1 à 7, **caractérisé en ce que** l'extrémité arrière (51R) du capot arrière (51) est disposée au-dessus du feu arrière (71).

9. Véhicule à selle (1) selon l'une quelconque des revendications 1 à 8, **caractérisé en ce qu'**il comprend en outre un capot protecteur (61) supporté par le cadre (3),
dans lequel le feu arrière (71) est supporté par le cadre (3) au travers du capot protecteur (61), et
l'extrémité arrière (51R) du capot arrière (51) s'étend plus vers l'arrière que le capot protecteur (61).

10. Véhicule à selle (1) selon la revendication 9, **caractérisé en ce que** :
au moins une partie du capot protecteur (61) est disposée en dessous de l'extrémité arrière (51R) du capot arrière (51),
le capot protecteur (61) possède une paroi supérieure (67) se renflant vers le haut depuis la surface supérieure du feu arrière (71),
la paroi supérieure (67) présente une largeur (W) correspondant au moins à la largeur du feu arrière (71) selon une vue arrière du véhicule, et
la paroi supérieure (67) a son bord supérieur (67a) qui chevauche l'extrémité arrière (51R) du capot arrière (51) selon la vue arrière du véhicule.

11. Véhicule à selle (1) selon l'une quelconque des revendications 1 à 10, **caractérisé en ce que** :
le capot avant (41) comporte un organe de jonction (46, A) destiné à relier le réservoir de carburant (31), et
le réservoir de carburant (31) positionne l'organe de jonction (46, A) du capot avant (41).

12. Véhicule à selle (1) selon la revendication 11, **caractérisé en ce que** :
le réservoir de carburant (31) inclut :
un corps de réservoir de carburant (32), et
un orifice de remplissage (33) dépassant vers le haut depuis le corps de réservoir de carburant (32),
dans lequel l'organe de jonction (46, A) du capot avant (41) inclut une ouverture (A) pratiquement de même taille que l'orifice de remplissage (33), et
l'orifice de remplissage (33) est disposé dans l'ouverture (A).

13. Véhicule à selle (1) selon l'une quelconque des revendications 1 à 12, **caractérisé en ce que** :
le capot arrière (51) possède un organe de jonction (57, 58) destiné à relier le capot avant (41), et
le capot avant (41) possède un organe de positionnement (47, 48) destiné à relier l'organe de jonction (57, 58) du capot arrière (51) et positionnant l'organe de jonction (57, 58) du capot arrière (51).

14. Véhicule à selle (1) selon la revendication 13, **caractérisé en ce que** :
l'un parmi l'organe de positionnement (47, 48) du capot avant (41) et l'organe de jonction (57, 58) du capot arrière (51) est une protubérance (58) dépassant vers l'intérieur de la direction transversale (Y) du véhicule à selle (1), et
l'autre de l'organe de positionnement (47, 48) du capot avant (41) et de l'organe de jonction (57, 58) du capot arrière (51) est un évidement (48) pouvant s'engrener avec la protubérance (58).

15. Véhicule à selle (1) selon l'une quelconque des revendications 1 à 14, **caractérisé en ce que** :
le capot arrière (51) inclut :
un capot arrière droit (53b) disposé à la droite du siège (37) selon une vue en plan,
un capot arrière gauche (53b) disposé à la gauche du siège (37) selon la vue en plan, et
un capot central arrière (53c) disposé à l'arrière du siège (37) selon la vue en plan, et réuni au capot arrière droit (53b) et au capot arrière gauche (53b),
le capot arrière droit (53b) s'étendant plus vers l'arrière que le siège (37),
le capot arrière gauche (53b) s'étendant plus vers l'arrière que le siège (37),
le capot central arrière (53c) étant disposé à la gauche du capot arrière droit (53b) et à la droite du capot arrière gauche (53b), et
le capot central arrière (53c) inclut :
un bord droit (86) chevauchant le capot arrière droit (53b) dans une position située à l'arrière du siège (37) selon la vue en plan, et
un bord gauche (87) chevauchant le capot arrière gauche (53b) dans une position située à l'arrière du siège (37) selon la vue en plan,
le bord droit (86) étant disposé en dessous du capot arrière droit (53b),
le bord gauche (87) étant disposé en dessous du capot arrière gauche (53b).
